# EUROPÄISCHE PATENTSCHRIFT

(11) **EP 3 143 689 B1**
(45) Veröffentlichungstag und Bekanntmachung des Hinweises auf die Patenterteilung: **22.05.2019**
(21) Anmeldenummer: 15708463.3
(22) Anmeldetag: 25.02.2015
(51) Int. Cl.: H02P 6/00, B25F 5/00

(54) **WERKZEUGMASCHINENVORRICHTUNG**
MACHINE TOOL DEVICE
DISPOSITIF DE MACHINE-OUTIL

(30) Priorität: 13.05.2014 DE 102014209009
(43) Veröffentlichungstag der Anmeldung: 22.03.2017
(73) Patentinhaber: Robert Bosch GmbH, 70442 Stuttgart (DE)
(72) Erfinder: BOECK, Cornelius, 73230 Kirchheim (DE); BARTH, Daniel, 70771 Leinfelden-Echterdingen (DE); SCHADOW, Joachim, 70563 Stuttgart (DE); MAUTE, Joerg, 71069 Sindelfingen (DE); STOCK, Joern, 72658 Bempflingen (DE); ESENWEIN, Florian, 70771 Leinfelden-Echterdingen (DE); LUTZ, Manfred, 70794 Filderstadt (DE)
(86) Internationale Anmeldenummer: PCT/EP2015/053933
(87) Internationale Veröffentlichungsnummer: WO 2015/172901

(56) Entgegenhaltungen:
- EP-A2- 1 455 319
- EP-A2- 2 617 529
- DE-A1- 10 238 710
- DE-A1-102009 015 421
- DE-A1-102012 202 116
- DE-U1-202006 014 977

## Beschreibung

### Stand der Technik

Aus US 2013/0187587 A1 ist bereits eine Werkzeugmaschinenvorrichtung, insbesondere eine Handwerkzeugmaschinenvorrichtung, bekannt, die eine Steuer- und/oder Regeleinheit und eine Antriebseinheitssensoreinheit zu einer Erfassung zumindest einer Antriebseinheitskenngröße umfasst, wobei die Antriebseinheitskenngröße zu einer Steuerung und/oder Regelung einer Antriebseinheit einer Werkzeugmaschine und/oder zu einer Informationsausgabe an einen Bediener von der Steuer- und/oder Regeleinheit verarbeitbar ist.

Die Offenlegungsschrift DE102012202116 offenbart eine Handwerkzeugmaschine mit den Merkmalen der Oberbegriffe der unabhängigen Ansprüche.

### Offenbarung der Erfindung

Die Erfindung geht aus von einer Werkzeugmaschinenvorrichtung, insbesondere von einer Handwerkzeugmaschinenvorrichtung, mit zumindest einer Steuer- und/oder Regeleinheit und mit zumindest einer Antriebseinheitssensoreinheit zu einer Erfassung zumindest einer Antriebseinheitskenngröße, die zumindest zu einer Steuerung und/oder Regelung einer Antriebseinheit einer Werkzeugmaschine und/oder zu einer Informationsausgabe an einen Bediener von der Steuer- und/oder Regeleinheit verarbeitbar ist.

Es wird vorgeschlagen, dass die Werkzeugmaschinenvorrichtung zumindest eine Bearbeitungswerkzeugsensoreinheit zu einer Erfassung zumindest einer Bearbeitungswerkzeugkenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Die Steuer- und/oder Regeleinheit ist zumindest vorzugsweise dazu vorgesehen, die Antriebseinheit in Abhängigkeit von der zumindest einen mittels der Antriebseinheitssensoreinheit erfassten Antriebseinheitskenngröße und in Abhängigkeit von der zumindest einen mittels der Bearbeitungswerkzeugsensoreinheit erfassten Bearbeitungswerkzeugkenngröße zu steuern und/oder zu regeln. Zusätzlich ist die Steuer- und/oder Regeleinheit bevorzugt zumindest dazu vorgesehen, eine Information in Abhängigkeit von der zumindest einen mittels der Antriebseinheitssensoreinheit erfassten Antriebseinheitskenngröße und in Abhängigkeit von der zumindest einen mittels der Bearbeitungswerkzeugsensoreinheit erfassten Bearbeitungswerkzeugkenngröße an einen Bediener auszugeben. Bevorzugt ist zumindest eine Antriebseinheitskennlinie, eine maximale Drehzahl, eine minimale Drehzahl, ein maximales Drehmoment und/oder ein minimales Drehmoment der Antriebseinheit mittels der Steuer- und/oder Regeleinheit steuerbar und/oder regelbar. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Unter "vorgesehen" soll insbesondere speziell programmiert, speziell ausgelegt und/oder speziell ausgestattet verstanden werden. Darunter, dass ein Element und/oder eine Einheit zu einer bestimmten Funktion vorgesehen sind/ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt.

Die Antriebseinheitssensoreinheit ist vorzugsweise dazu vorgesehen, zumindest eine Antriebseinheitskenngröße einer als Elektromotoreinheit, insbesondere einer als bürstenlose Elektromotoreinheit, ausgebildeten Antriebseinheit zu erfassen. Somit ist die Antriebseinheitssensoreinheit bevorzugt als EC-Elektromotorantriebseinheitssensoreinheit ausgebildet. Die Antriebseinheitskenngröße kann hierbei als Antriebseinheitsstrom, als Antriebseinheitsspannung, als Antriebseinheitsdrehwinkel, als elektrischer Antriebseinheitswiderstand, als Antriebseinheitsmagnetfeldkenngröße, als elektromotorische Kraftkenngröße der Antriebseinheit, als Antriebseinheitsdrehzahl, als Antriebseinheitsdrehmoment, als Antriebseinheitswinkelgeschwindigkeit, als Antriebseinheitsrotorposition, als Antriebseinheitsdrehrichtung, als Antriebseinheitstemperatur oder als eine weitere, einem Fachmann als sinnvoll erscheinende Antriebseinheitskenngröße ausgebildet sein. Die Antriebseinheitskenngröße ist vorzugsweise verschieden von einer reinen Schalterbetätigung eines Schalters durch einen Bediener. Die Antriebseinheitssensoreinheit umfasst zumindest ein Antriebseinheitssensorelement zu einer Erfassung der zumindest einen Antriebseinheitskenngröße. Das Antriebseinheitssensorelement kann hierbei als Antriebseinheitsstromsensor, als Antriebseinheitsspannungssensor, als Antriebseinheitsdrehwinkelsensor, als elektrischer Antriebseinheitswiderstandssensor, als Antriebseinheitsmagnetfeldsensor, als elektromotorischer Kraftkenngrößensensor, als Antriebseinheitsdrehzahlsensor, als Antriebseinheitsdrehmomentsensor, als Antriebseinheitswinkelgeschwindigkeitssensor, als Antriebseinheitsrotorpositionssensor, als Antriebseinheitsdrehrichtungssensor, als Antriebseinheitstemperatursensor oder als ein weiteres, einem Fachmann als sinnvoll erscheinendes Antriebseinheitssensorelement ausgebildet sein.

Eine Informationsausgabeeinheit zu einer Informationsausgabe an einen Bediener ist vorzugsweise als optische, akustische und/oder haptische Informationsausgabeeinheit ausgebildet. Hierbei ist die Informationsausgabeeinheit vorzugsweise ein Bestandteil der Werkzeugmaschinenvorrichtung. Es ist jedoch auch denkbar, dass die Informationsausgabeeinheit ein Bestandteil einer die Werkzeugmaschinenvorrichtung umfassenden Werkzeugmaschine oder ein Bestandteil einer externen Einheit, wie beispielsweise eines Smartphones, eines Tablets, eines PCs, eines Laptops o. dgl., ist. Die Informationsausgabeeinheit umfasst zu einer Informationsausgabe an einen Bediener vorzugsweise zumindest eine optische Ausgabeeinheit, wie beispielsweise ein LC-Display, ein berührungsempfindliches Display, ein LED-Display, ein Plasma-Display o. dgl., zu einer optischen Informationsausgabe an einen Bediener. Bevorzugt umfasst die Informationsausgabeeinheit zumindest eine akustische Ausgabeeinheit, wie beispielsweise einen Lautsprecher o. dgl., zu einer akustischen Informationsausgabe an einen Bediener. Besonders bevorzugt umfasst die Informationsausgabeeinheit zumindest eine haptische Ausgabeeinheit, wie beispielsweise eine Schwingungserregereinheit o. dgl., zu einer haptischen Informationsausgabe an einen Bediener. Es ist jedoch auch denkbar, dass eine Informationsausgabe an einen Bediener infolge einer Ansteuerung der Antriebseinheit mittels der Steuer- und/oder Regeleinheit erfolgt. Hierbei ist es denkbar, dass eine Informationsausgabe an einen Bediener beispielsweise durch eine Drehzahlschwankung einer Antriebseinheitsdrehzahl o. dgl. erfolgt. Weitere, einem Fachmann als sinnvoll erscheinende antriebseinheitsbezogene Informationsausgaben an einen Bediener sind ebenfalls denkbar.

Die Bearbeitungswerkzeugsensoreinheit ist vorzugsweise dazu vorgesehen, zumindest eine Bearbeitungswerkzeugkenngröße eines in einer Werkzeugaufnahme angeordneten Bearbeitungswerkzeugs zu erfassen. Die Werkzeugaufnahme ist vorzugsweise ein Bestandteil einer die Werkzeugmaschinenvorrichtung umfassenden Werkzeugmaschine. Es ist jedoch auch denkbar, dass die Werkzeugaufnahme ein Bestandteil der Werkzeugmaschinenvorrichtung ist. Die Bearbeitungswerkzeugkenngröße kann hierbei als Bearbeitungswerkzeugmasse, als Bearbeitungswerkzeugabmessung, als Bearbeitungswerkzeugschwingung, als Bearbeitungswerkzeuggeschwindigkeit, als Bearbeitungswerkzeugdrehzahl, als Bearbeitungswerkzeugträgheit, als Bearbeitungswerkzeugart, als Bearbeitungswerkzeugtemperatur, als Bearbeitungswerkzeugverschmutzungsgrad, als Bearbeitungswerkzeugschneidkantenabnutzung, oder als eine andere, einem Fachmann als sinnvoll erscheinende Bearbeitungswerkzeugkenngröße ausgebildet sein. Die Bearbeitungswerkzeugsensoreinheit umfasst zumindest ein Bearbeitungswerkzeugsensorelement zu einer Erfassung der zumindest einen Bearbeitungswerkzeugkenngröße. Das Bearbeitungswerkzeugsensorelement kann hierbei als Bearbeitungswerkzeugmassensensor, als Bearbeitungswerkzeugabmessungssensor, als Bearbeitungswerkzeugschwingungssensor, als Bearbeitungswerkzeuggeschwindigkeitssensor, als Bearbeitungswerkzeugdrehzahlsensor, als Bearbeitungswerkzeugträgheitssensor, als Bearbeitungswerkzeugartensensor, als Bearbeitungswerkzeugtemperatursensor, als Bearbeitungswerkzeugverschmutzungsgradsensor, als Bearbeitungswerkzeugschneidkantenabnutzungssensor oder als ein anderes, einem Fachmann als sinnvoll erscheinendes Bearbeitungswerkzeugsensorelement ausgebildet sein.

Vorzugsweise sind/ist mittels der Steuer- und/oder Regeleinheit zumindest bei einem Hochlaufen der Antriebseinheit auf eine Leerlaufdrehzahl zumindest eine Antriebseinheitskenngröße und/oder zumindest eine Bearbeitungswerkzeugkenngröße ermittelbar. Hierbei sind bevorzugt mittels zumindest eines Bearbeitungswerkzeugsensorelements, das als Beschleunigungssensor ausgebildet ist, Schwingungen eines Bearbeitungswerkzeugs erfassbar, wobei die erfassten Signale mittels der Steuer- und/oder Regeleinheit auswertbar sind. Zudem ist vorzugsweise mittels zumindest eines weiteren Bearbeitungswerkzeugsensorelements, das als optischer Sensor (Kamera, Infrarotsensor usw.) oder als Abstandssensor ausgebildet ist, eine Bearbeitungswerkzeugkenngröße erfassbar, die zu einer Bestimmung einer Bearbeitungswerkzeugabmessung von der Steuer- und/oder Regeleinheit verarbeitbar ist. Zudem ist bevorzugt mittels eines Antriebseinheitssensorelements ein Motorstrom bei einem Hochfahren der Antriebseinheit auf eine Leerlaufdrehzahl erfassbar, der zu einer Bestimmung einer Trägheit eines Bearbeitungswerkzeugs mittels der Steuer- und/oder Regeleinheit verarbeitbar ist. Ferner ist mittels zumindest einer erfassten Bearbeitungswerkzeugkenngröße eine Bearbeitungswerkzeugart eines Bearbeitungswerkzeugs durch die Steuer- und/oder Regeleinheit bestimmbar, wobei Parameter zu einer Steuerung und/oder einer Regelung der Antriebseinheit bearbeitungswerkzeugspezifisch veränderbar sind, wie beispielsweise eine Einstellung einer Drehzahl für Edelstahlanwendungen bei einem Erkennen eines Edelstahlbearbeitungswerkzeugs an einer als Winkelschleifer ausgebildeten tragbaren Werkzeugmaschine, ein Soft Start bei einem Erkennen eines Polierbearbeitungswerkzeugs oder eine Aktivierung einer Bremsfunktion einer tragbaren Werkzeugmaschine bei einer Erkennung eines Trennbearbeitungswerkzeugs, wie beispielsweise eine Trennscheibe bei einer als Winkelschleifer ausgebildeten tragbaren Werkzeugmaschine. Zusätzlich zu einer Erfassung von zumindest einer Bearbeitungswerkzeugkenngröße mittels der Bearbeitungswerkzeugsensoreinheit ist auch eine Übertragung von zumindest einer Bearbeitungswerkzeugkenngröße mittels RFID, eines Barcodes, eines Data-Matrix Codes o. dgl. denkbar. Hierdurch kann vorteilhaft eine eindeutige Kennung einer Bearbeitungswerkzeugart und/oder eines Werkzeugtyps erfolgen, zu der in der Speichereinheit der Steuer- und/oder Regeleinheit bearbeitungswerkzeugspezifische Parameter hinterlegt sind, die infolge einer Erfassung von zumindest einer Bearbeitungswerkzeugkenngröße durch die Bearbeitungswerkzeugsensoreinheit mittels der Steuer- und/oder Regeleinheit anpassbar sind, wie beispielsweise an einen Verschleißgrad, an einen Unwuchtgrad usw.

Ein elektronischer Datenaustausch zwischen der Steuer- und/oder Regeleinheit und der Antriebseinheitssensoreinheit und/oder der Bearbeitungswerkzeugsensoreinheit erfolgt vorzugsweise drahtgebunden. In einer alternativen Ausgestaltung der Werkzeugmaschinenvorrichtung erfolgt ein elektronischer Datenaustausch zwischen der Steuer- und/oder Regeleinheit und der Antriebseinheitssensoreinheit und/oder der Bearbeitungswerkzeugsensoreinheit kabellos, wie beispielsweise mittels einer Bluetoothverbindung, mittels einer WLAN-Verbindung, mittels einer NFC-Verbindung, mittels einer Infrarotverbindung o. dgl. Die Steuer- und/oder Regeleinheit steuert und/oder regelt die Antriebseinheit besonders bevorzugt zumindest in Abhängigkeit von der mittels der Antriebseinheitssensoreinheit erfassten Antriebseinheitskenngröße und der mittels der Bearbeitungswerkzeugsensoreinheit erfassten Bearbeitungswerkzeugkenngröße. Weitere, einem Fachmann als sinnvoll erscheinende Kenngrößen, die von der Steuer- und/oder Regeleinheit zu einer Steuerung und/oder Regelung der Antriebseinheit berücksichtigbar sind, sind ebenfalls denkbar.

Mittels der erfindungsgemäßen Ausgestaltung der Werkzeugmaschinenvorrichtung kann vorteilhaft eine Beschädigung an einem Bearbeitungswerkzeug erkannt werden, insbesondere bevor ein Werkstück mit dem Bearbeitungswerkzeug bearbeitet wird. Es können vorteilhaft beispielsweise Vibrationen erfasst werden und eine entsprechende Warnung an einen Bediener ausgegeben werden, sollten die Vibrationen einen kritischen Wert überschreiten und/oder eine Steuerung und/oder Regelung der Antriebseinheit an ein beschädigtes Bearbeitungswerkzeug angepasst werden. Somit kann vorteilhaft eine Verletzungsgefahr für einen Bediener gering gehalten werden. Zudem können somit vorteilhaft unzulässig oder falsch montierte Bearbeitungswerkzeuge erkannt werden.

In einer vorteilhaften Ausgestaltung der Werkzeugmaschinenvorrichtung verarbeitet die Steuer- und/oder Regeleinheit in zumindest einem Betriebsmodus die zumindest eine mittels der Bearbeitungswerkzeugsensoreinheit erfasste Bearbeitungswerkzeugkenngröße zu einer Bestimmung eines Werkzeugtyps eines an einer Werkzeugaufnahme der Werkzeugmaschine angeordneten Bearbeitungswerkzeugs. Somit ist vorzugsweise mittels der Werkzeugmaschinenvorrichtung ein Werkzeugtyp eines an der Werkzeugaufnahme der Werkzeugmaschine angeordnetes Bearbeitungswerkzeug anhand seines charakteristischen Einflusses auf ein Maschinenverhalten der Werkzeugmaschine erkennbar. Die Werkzeugmaschinenvorrichtung ist hierbei vorzugsweise dazu vorgesehen, mittels zumindest eines Beschleunigungssensors oder mittels mehreren Beschleunigungssensoren der Bearbeitungswerkzeugsensoreinheit eine Vibration (Eigenschwingung) des Bearbeitungswerkzeugs zu erfassen und zusätzlich während eines Hochlaufens auf eine Leerlaufdrehzahl der Antriebseinheit und/oder des Bearbeitungswerkzeugs ein Beschleunigungsmoment zu erfassen. Aus diesen Daten schließt die Werkzeugmaschinenvorrichtung auf den Einsatz von z.B. einer Bohrkrone mit einem erkannten Durchmesser x und stellt eine optimale Drehzahl, eine optimale Schlagzahl, ein Auslösemoment einer Überlastkupplung im Falle einer Ausgestaltung der Werkzeugmaschine als Bohrhammer entsprechend den Werten für einen optimalen Arbeitsfortschritt ein. Weitergehend ist es denkbar, dass die Werkzeugmaschinenvorrichtung die zuvor eingestellten Steuerparameter der Antriebseinheit infolge eines Referenzlaufs weiter adaptiert, wie beispielsweise durch z.B. eine Bohrtiefenerkennung, bei dem der Arbeitsfortschritt innerhalb einer definierten Zeit erkennbar ist, wobei aus einer Kombination eines Arbeitsfortschritts und einer Bestimmung des Werkzeugtyps ein Rückschluss auf ein Material (Beton, Gips, Ziegel, etc.) eines bearbeiteten Werkstücks ziehbar ist. Zusätzlich ist es denkbar, dass die Werkzeugmaschinenvorrichtung ein Werkzeugtyp eines an der Werkzeugaufnahme der Werkzeugmaschine angeordneten Bearbeitungswerkzeugs anhand eines am Bearbeitungswerkzeug angeordneten Informationsträger (BARCODE, DATA Matrix, RFID, NFC, etc.) erkennt und/oder einen Abgleich von mittels der Bearbeitungswerkzeugsensoreinheit erfassten Bearbeitungswerkzeugkenngröße und einer durch den Informationsträger ausgegebenen Parameter ermöglicht. Die Werkzeugmaschinenvorrichtung erfasst hierzu vorzugsweise bereits bei der Montage des Bearbeitungswerkzeugs (beispielsweise eine Schruppscheibe, eine Trennscheibe, eine Fächerscheibe usw. bei einer Ausgestaltung der Werkzeugmaschine als Winkelschleifer) und/oder nach einer Bestromung der Antriebseinheit der Werkzeugmaschine, über beispielsweise NFC, einen Werkzeugtyp, einen Durchmesser des Bearbeitungswerkzeugs, eine maximal für das Bearbeitungswerkzeug zulässige Drehzahl oder andere werkzeugspezifische Kenngrößen des Bearbeitungswerkzeugs. Aus diesen Daten sind Rückschlüsse beispielsweise bezüglich einer Kickback-Stopp-Einstellung , einer maximalen und/oder einer minimalen Drehzahl, eine Einstellung eines Überlastschutzes, eine Drehzahlsteifigkeit usw. ziehbar und die Antriebseinheit ist mittels der Werkzeugmaschinenvorrichtung entsprechend einstellbar. Mittels der erfindungsgemäßen Ausgestaltung kann vorteilhaft eine Anpassung einer Steuerung und/oder Regelung der Antriebseinheit an ein an der Werkzeugaufnahme der Werkzeugmaschine angeordnetes Bearbeitungswerkzeug erfolgen.

Vorteilhafterweise umfasst die Steuer- und/oder Regeleinheit zumindest eine Speichereinheit, in der zumindest ein Einstellungsparameter zu einer Steuerung und/oder einer Regelung der Antriebseinheit speicherbar ist, der zumindest von zumindest einer vorangegangenen Bearbeitung eines Werkstücks abhängig ist. In der Speichereinheit ist vorzugsweise eine bei vorangegangenen Bearbeitungen von Werkstücken genutzte Einstellungshistorie speicherbar. Mittels der in der Speichereinheit gespeicherten Einstellungshistorie ist vorzugsweise eine wahrscheinlichste Einstellung für zukünftige Bearbeitungen ermittelbar und Kenngrößen sind als default Werte vorgebbar. Beispielsweise ist eine als Winkelschleifer ausgebildete Werkzeugmaschine in fünf vorangegangenen Anwendungsfällen, einmal zu einem Trennen eines Werkstücks und viermal zu einem Schleifen eingesetzt worden. Beim Trennen ist beispielsweise eine Kickback-Stopp-Funktion sensitiv eingestellt, eine Drehzahl ist hoch eingestellt und ein Überlastschutz ist hoch eingestellt, so dass dieser erst bei einer hohen Überlast auslöst. Beim Schleifen ist beispielsweise wiederum die Kickback-Stopp-Funktion deaktiviert und der Überlastschutz ist niedrig eingestellt, so dass dieser bei einer geringen Überlast auslöst. Da die Werkzeugmaschine in den vorangegangenen Bearbeitungsfällen öfter zum Schleifen genutzt wurde, werden mittels der Werkzeugmaschinenvorrichtung beispielsweise automatisch bei einem Einschalten der Werkzeugmaschine default Werte für das Schleifen voreingestellt. Zudem ist die Werkzeugmaschinenvorrichtung vorzugsweise dazu vorgesehen, Parameter zu einer Steuerung und/oder Regelung der Antriebseinheit in Abhängigkeit eines Anlernbetriebsmodus in der Speichereinheit zu speichern. Hierbei lernt die Werkzeugmaschinenvorrichtung während des Anlernbetriebsmodus was gefordert ist, stellt Parameter zu einer Steuerung und/oder Regelung der Antriebseinheit entsprechend ein und reproduziert diese während eines Referenzbetriebsmodus. Beispielsweise weist eine in einer als Stichsäge ausgebildeten Werkzeugmaschine angeordnete Werkzeugmaschinenvorrichtung hierzu zumindest einen Wegsensor, zumindest einen Drehzahlsensor und zumindest einen Beschleunigungssensor auf. Während des Anlernbetriebsmodus wird ein Schnitt zunächst bei langsamer Drehzahl angerissen und anschließend die Drehzahl angepasst, um einen schnellen Arbeitsfortschritt zu erreichen. Um beim Aussägen einer Kontur präzise zu Arbeiten, wird bei "Kurvenschnitten" die Drehzahl reduziert. Anhand des zumindest einen Wegsensors, des zumindest einen Drehzahlsensors und des zumindest einen Beschleunigungssensors kann die Werkzeugmaschinenvorrichtung aufgrund einer Berechnung eines zurückgelegten Schnittweges sowie einer Querbeschleunigung bei einem Bewegen der Werkzeugmaschine zumindest ein in der Speichereinheit gespeichertes Geschwindigkeitsprofil reproduzieren. Es kann vorteilhaft eine Kleinserienfertigung mit sich stets wiederholenden Arbeitsschritten bei gleichbleibenden Bearbeitungsparametern ermöglicht werden. Somit kann mittels der erfindungsgemäßen Ausgestaltung vorteilhaft ein hoher Bedienkomfort erreicht werden.

Des Weiteren wird vorgeschlagen, dass die Werkzeugmaschinenvorrichtung zumindest eine Bedienersensoreinheit zu einer Erfassung zumindest einer bedienerspezifischen Kenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Unter einer "bedienerspezifischen Kenngröße" soll hier insbesondere eine Kenngröße verstanden werden, die abhängig ist von einem Verhalten eines Bedieners, wie beispielsweise eine Einwirkung eines Bedieners auf die Werkzeugmaschinenvorrichtung, insbesondere eine Einwirkung eines Bedieners auf eine die Werkzeugmaschinenvorrichtung umfassende Werkzeugmaschine, einen Ausbildungsstand eines Bedieners und/oder ein Nutzungsverhalten eines Bedieners einer die Werkzeugmaschinenvorrichtung umfassenden Werkzeugmaschine. Die bedienerspezifische Kenngröße kann hierbei als Bedienerandrückkraft, als Bedienervorschubkraft, als Bedienerausbildungsstatus, als Bedienerhaltekraft, als bedienerspezifische Belastungsart, als Bedieneranwendungsfall, als Bedieneranpressdruck, als Bedienernutzungsgrad, wie beispielsweise eine häufige Nutzung oder eine seltene Nutzung beschreibende Kenngröße, als Bedienernutzungsdauer, als Bedienerbelastung, wie beispielsweise eine Geräuschbelastung und/oder eine Schwingungsbelastung, als Bedienerzugangsberechtigung zu einem Ort und/oder als eine andere, einem Fachmann als sinnvoll erscheinende bedienerspezifische Kenngröße ausgebildet sein. Mittels der erfindungsgemäßen Ausgestaltung kann vorteilhaft ein Bedienerverhalten zu einer Steuerung und/oder einer Regelung der Antriebseinheit berücksichtigt werden. Hierbei ist beispielsweise denkbar, dass ein Parameter eines Anlaufverhaltens an die bedienerspezifische Kenngröße anpassbar ist, eine Antriebseinheitskenngröße an die bedienerspezifische Kenngröße anpassbar ist, eine Schlagfrequenz an die bedienerspezifische Kenngröße anpassbar ist, eine Schlagenergie an die bedienerspezifische Kenngröße anpassbar ist, ein Pendelhubparameter an die bedienerspezifische Kenngröße anpassbar ist oder weitere, einem Fachmann als sinnvoll erscheinende Parameter oder Kennfelder einer Antriebseinheit an die bedienerspezifische Kenngröße anpassbar sind. Somit kann vorteilhaft ein Verletzungsrisiko für einen Bediener und/oder eine Fehlbedienung einer die Werkzeugmaschinenvorrichtung umfassenden Werkzeugmaschine gering gehalten werden. Zudem kann vorteilhaft ein Bediener in eine Nutzergruppe eingeordnet werden, um Parameter zu einer Steuerung und/oder Regelung der Antriebseinheit auf den Bediener anzupassen.

Ferner wird vorgeschlagen, dass die Werkzeugmaschinenvorrichtung zumindest eine Werkstücksensoreinheit zu einer Erfassung zumindest einer Werkstücckenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Bevorzugt ist die Werkstücksensoreinheit dazu vorgesehen, zumindest einen Werkstoff eines Werkstücks zu erfassen. Zudem ist die Werkstücksensoreinheit zusätzlich oder alternativ dazu vorgesehen, eine Dichte eines Werkstücks, einen Abstand eines Werkstücks relativ zu einem in einer Werkzeugaufnahme angeordneten Bearbeitungswerkzeug, eine Abmessung eines Werkstücks, eine Lage eines Werkstücks und/oder weitere, einem Fachmann als sinnvoll erscheinende Werkstückkenngrößen zu erfassen. Somit kann vorteilhaft eine Steuerung und/oder Regelung einer Antriebseinheit erfolgen, die vorteilhaft auf ein zu bearbeitendes Werkstück und ein in einer Werkzeugaufnahme angeordnetes Bearbeitungswerkzeug abgestimmt ist. Hierdurch kann vorteilhaft eine präzise Bearbeitung eines Werkstücks ermöglicht werden. Zudem kann vorteilhaft ein hoher Arbeitsfortschritt ermöglicht werden.

Zudem wird vorgeschlagen, dass die Werkzeugmaschinenvorrichtung zumindest eine Werkzeugmaschinenzubehörsensoreinheit zu einer Erfassung zumindest einer Werkzeugmaschinenzubehörkenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Unter einer "Werkzeugmaschinenzubehörsensoreinheit" soll hier insbesondere eine Sensoreinheit verstanden werden, die eine Kenngröße zumindest eines Werkzeugmaschinenzubehörs, das an einer die Werkzeugmaschinenvorrichtung umfassenden Werkzeugmaschine anbringbar ist, erfasst. Die Werkzeugmaschinenzubehörkenngröße kann hierbei als eine Zubehörzustandskenngröße, wie beispielsweise eine Montagezustandskenngröße eines Zubehörs, eine Abnutzungszustandskenngröße, als Zubehörpositionskenngröße, als Zubehörfunktionskenngröße, als Zubehörabmessungskenngröße o. dgl. ausgebildet sein. Somit kann vorteilhaft eine Berücksichtigung eines montierten Zubehörs bei einer Steuerung und/oder Regelung der Antriebseinheit mittels der Steuer- und/oder Regeleinheit erfolgen. Es kann beispielsweise vorteilhaft bei einem falschen, fehlerhaften und/oder verschlissenen Zubehör eine Informationsausgabe an einen Bediener erfolgen und/oder ein Steuer- und/oder Regelparameter kann vorteilhaft angepasst werden, wie beispielsweise eine Drehzahl, eine Stromzufuhr, eine Spannungszufuhr o. dgl.

Des Weiteren wird vorgeschlagen, dass die Werkzeugmaschinenvorrichtung zumindest eine Eingabeeinheit zu einer Eingabe zumindest einer Bearbeitungskenngröße umfasst, die zumindest zu einer Steuerung und/oder Regelung der Antriebseinheit von der Steuer- und/oder Regeleinheit verarbeitbar ist. Die Eingabeeinheit kann hierbei als berührungsempfindliches Display und/oder als tastengebundene Eingabeschnittstelle. ausgebildet sein. Mittels der Eingabeeinheit sind vorzugsweise zumindest eine Antriebseinheitskennlinie, eine maximale Drehzahl, eine minimale Drehzahl, ein maximales Drehmoment, ein minimales Drehmoment mittels einer Eingabe eines Bedieners einstellbar. Es ist zudem denkbar, dass alternativ oder zusätzlich Bearbeitungswerkzeugkenngrößen, Werkstückkenngrößen usw. mittels der Eingabeeinheit von einem Bediener eingebbar sind, die bei einer Steuerung und/oder Regelung der Antriebseinheit von der Steuer- und/oder Regeleinheit verarbeitbar sind. Somit ist vorteilhaft ein aktives Eingreifen eines Bedieners in eine Steuerung und/oder Regelung der Antriebseinheit mittels der Steuer- und/oder Regeleinheit erreichbar.

Ferner wird vorgeschlagen, dass die Werkzeugmaschinenvorrichtung zumindest eine Kommunikationseinheit zu einer Kommunikation mit zumindest einer externen Einheit zu einem Austausch von elektronischen Daten zumindest zu einer Steuerung und/oder Regelung der Antriebseinheit umfasst. Die Kommunikationseinheit ist vorzugsweise als kabellose Kommunikationseinheit ausgebildet. Hierbei kann die Kommunikationseinheit als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit o. dgl. ausgebildet sein. Besonders bevorzugt ist die Kommunikationseinheit zu einer bidirektionalen Datenübertragung vorgesehen. In einer alternativen Ausgestaltung ist die Kommunikationseinheit als kabelgebundene Kommunikationseinheit ausgebildet, wie beispielsweise als LAN-Kommunikationseinheit, als USB-Kommunikationseinheit o. dgl. Die externe Einheit ist vorzugsweise als Smartphone ausgebildet, das eine App zu einer Kommunikation mit der Kommunikationseinheit aufweist. Es ist jedoch auch denkbar, dass die externe Einheit als externe, transportable Bedieneinheit, als fest installierte Bedieneinheit an einem Arbeitsplatz eines Bedieners, als fest in einem Raum installierte Synchronisationseinheit eines Einsatzortes, die von einer Zentrale gesteuert werden kann, wie beispielsweise infolge von Firmenvorgaben/Sicherheitsbestimmungen, oder als weitere, einem Fachmann als sinnvoll erscheinende zentrale oder dezentrale Bedieneinheit, Eingabestation und/oder zentrales oder dezentrales Terminal ausgebildet ist. Es kann somit vorteilhaft eine Synchronisation von elektronischen Daten ermöglicht werden. Wird beispielsweise eine die Werkzeugmaschinenvorrichtung umfassende Werkzeugmaschine in einem Synchronisationsmodus in Betrieb genommen, beispielsweise durch ein Einstecken einer Akkumulatorvorrichtung oder bei einem Einstecken eines Stromversorgungskabels, wird zumindest teilweise automatisch eine Verbindung zwischen der Kommunikationseinheit und einer externen Einheit aufgebaut. In der externen Einheit hinterlegte Einstellungen sind somit vorzugsweise direkt auf die die Werkzeugmaschinenvorrichtung umfassende Werkzeugmaschine übertragbar. Hierbei kann es sich um individuelle Einstellungen eines Bedieners, wie beispielsweise ein gewünschtes, schnelles Hochfahren auf eine eingestellte Drehzahl und eine maximale Leistung und/oder um Vorgaben einer Firma, wie beispielsweise eine Einhaltung einer Sicherheitsfunktion in einem vorgegebenen Bereich eines Firmengeländes oder eines Einsatzorts. handeln. Zudem sind elektronische Daten mittels der Kommunikationseinheit an die externe Einheit übertragbar. Hierbei ist beispielsweise eine Vibrationsbelastung eines Bedieners zu einer Kontrolle einer Einhaltung einer Belastungsgrenze und/oder eventuelle Bezahlung von Zulagen und/oder eine Laufzeit und eine Last zu einer Beurteilung einer Werkzeugmaschinenauslastung an eine Firmenzentrale o. dgl. übertragbar. Es ist zudem denkbar, dass die externe Einheit ein Vorhandensein einer Sicherheitsausrüstung und/oder einer geeigneten Arbeitskleidung überprüft, wie beispielsweise mittels RFID-Kennung, wobei die externe Einheit in Abhängigkeit einer erkannten Sicherheitsausrüstung und/oder einer geeigneten Arbeitskleidung Einstellungen zu einer Steuerung und/oder Regelung der Antriebseinheit über die Kommunikationseinheit an die Steuer- und/oder Regeleinheit überträgt. Mittels der erfindungsgemäßen Ausgestaltung kann vorteilhaft eine komfortable, insbesondere zentrale, Einstellung von Kenngrößen einer die Werkzeugmaschinenvorrichtung umfassenden Werkzeugmaschine erfolgen.

Ferner wird vorgeschlagen, dass die Steuer- und/oder Regeleinheit dazu vorgesehen ist, mittels der Kommunikationseinheit auf eine zentrale Datenbank zuzugreifen, in der zumindest eine Sicherheits- und/oder Betriebsbereichsregel hinterlegt sind/ist, die zumindest zu einer Steuer- und/oder Regelung der Antriebseinheit von der Steuer- und/oder Regeleinheit verarbeitbar sind/ist. Somit ist die Steuer- und/oder Regeleinheit vorzugsweise dazu vorgesehen, zumindest die Antriebseinheit der tragbaren Werkzeugmaschine in Abhängigkeit von zumindest einer Sicherheits- und/oder Betriebsbereichsregel eines Bereichs einer Infrastruktur zu steuern und/oder zu regeln. Hierbei ist insbesondere ein Ort, wie beispielsweise eine globale Position, an dem die tragbare Werkzeugmaschine innerhalb der Infrastruktur genutzt wird, berücksichtigbar. Zudem ist es denkbar, dass die Steuer- und/oder Regeleinheit dazu vorgesehen ist, weitere Funktionen der tragbaren Werkzeugmaschine, wie beispielsweise eine Sicherheitsfunktion (Kick-Back-Funktion o. dgl.) in Abhängigkeit von zumindest einer Sicherheits- und/oder Betriebsbereichsregel eines Bereichs einer Infrastruktur zu steuern und/oder zu regeln. Zudem ist es denkbar, dass Orte, wie beispielsweise Baustellen, außerhalb der Infrastruktur mittels eines digitalen Sicherheits- und/oder Betriebsbereichsregelrasters auf Grundlage von GPS-Daten überzogen sind, mittels dem eine Zuordnung von Sicherheits- und/oder Betriebsbereichsregeln für einen Ort außerhalb der Infrastruktur erreichbar ist.

Der Begriff "zentrale Datenbank" soll hier insbesondere eine Datenbank definieren, die zentral von einer Verwaltungseinheit, wie beispielsweise von einer Gebäudeverwaltung, von einer Sicherheitsverwaltung o. dgl. gepflegt und/oder verwaltet wird. Bevorzugt sind in der zentralen Datenbank Daten, insbesondere elektronische Daten, hinterlegt, die spezifische Regeln, Auflagen, Gefährdungspotenziale, Sicherheitskategorien o. dgl. für zumindest einen Bereich einer Infrastruktur, insbesondere einen Bereich eines Werksgeländes, einen Bereich einer Arbeitsstätte o. dgl. definieren. In einer Infrastruktur, insbesondere in einer Infrastruktur eines Werksgeländes sind Labore, Werkstätten, Büros o. dgl. vorhanden, die unterschiedliche Gefährdungspotenziale aufweisen. Hierbei trägt insbesondere das Facility Management (FCM) eine Verantwortung für technische Einrichtungen und/oder einzelne Bereiche der Infrastruktur. Vorzugsweise werden regelmäßig Gefährdungsbeurteilungen von Health and Safety Engineers (HSE) für technische Einrichtungen und/oder für einzelne Bereiche der Infrastruktur durchgeführt. Somit werden vorzugsweise einzelnen Bestandteilen der Infrastruktur, wie beispielsweise einzelnen Laboren, einzelnen Werkstätten und/oder einzelnen Büros spezifische Regeln, Auflagen, Sicherheitskategorien o. dgl. zugeordnet. Beispielsweise kann eine Zuordnung vorgenommen werden, die besagt, dass hohe bis sehr hohe Sicherheitsstandards einzuhalten sind. Hierbei kann beispielsweise in einzelnen Bereichen der Infrastruktur, insbesondere in bestimmten Räumen, ein Explosionsschutz gelten. Somit sind vorzugsweise in diesen Bereichen Arbeiten untersagt, bei denen beispielsweise Funken entstehen können, oder es sind nur bestimmte Werkzeugmaschinen zu einer Durchführung der Arbeiten zugelassen. Ferner sind Zuordnungen mit mittleren bis niedrigen Sicherheitsstandards denkbar. Zudem sind zusätzlich oder alternativ Zuordnungen denkbar, die Vibrations- und/oder Geräuschlimits betreffen.

Bevorzugt wird die zentrale Datenbank in regelmäßigen Zeitabständen aktualisiert, insbesondere von einem Mitarbeiter des Facility Managements und/oder von einem Health and Safety Engineer (HSE). Hierbei werden vorzugsweise für die einzelnen Bereiche der Infrastruktur, wie beispielsweise für einzelne Räume, Labore, Werkstätten o. dgl., Gefährdungsbeurteilungen durchgeführt. Anhand dieser Gefährdungsbeurteilungen sind enstprechende elektronische Daten in der zentralen Datenbank ablegbar, die in Abhängigkeit eines Grads der Gefährdung den einzelnen Bereichen der Infrastruktur Benutzungs- und/oder Betriebskenngrößen zu einer Benutzung und/oder zu einem Betrieb einer tragbaren Werkzeugmaschine vorgeben, wie beipsielsweise eine Einhaltung von vorgegebenen Verhaltensregeln, ein Vorhandensein einer persönlichen Schutzausrüstung (PSA), ein Festlegen einer Zugangsberechtigung, eine Vorweisungspflicht einer erweiterten Ausbildung oder einer Einweisung. Mittels der erfindungsgemäßen Ausgestaltung kann somit vorteilhaft eine hohe Anwendersicherheit erreicht werden, da eine automatische Einbeziehung von Sicherheits- und/oder Betriebsbereichsregeln mittels der Steuer- und/oder Regeleinheit erfolgt. Somit kann vorteilhaft eine orts- und/oder regelabhängige Steuer- und/oder Regelung der tragbaren Werkzeugmaschine erreicht werden. Zudem ist es denkbar, dass zusätzlich oder alternativ zu einer Kommunikation mit der zentralen Datenbank eine Kommunikation, insbesondere ein Datenaustausch, mit zumindest einer Sensoreinheit einer Arbeitskleidung, insbesondere einer persönlichen Schutzausrüstung (PSA), die ein Bediener und/oder Anwender am Körper trägt, erfolgt. Somit kann vorteilhaft eine Sicherheitsfunktion der tragbaren Werkzeugmaschine weiter gesteigert werden. Es kann besonders vorteilhaft eine sichere Erkennung von Gefahrensituationen infolge eines Anzeigens, eines aktiven Warnens, eines Außerbetriebnehmens der tragbaren Werkzeugmaschine o. dgl. ermöglicht werden. Somit kann ein Bediener der tragbaren Werkzeugmaschine vorteilhaft vor Gefährdungen und/oder vor Verletzungen geschützt werden.

Vorteilhafterweise adaptiert die Steuer- und/oder Regeleinheit zumindest einen in der Speichereinheit der Steuer- und/oder Regeleinheit abgespeicherten Parameter zu einer Steuerung und/oder Regelung der Antriebseinheit in Abhängigkeit von mittels der Kommunikationseinheit übertragenen elektronischen Daten. Hierbei ist es denkbar, dass die Werkzeugmaschinenvorrichtung sich mittels der Kommunikationseinheit beispielsweise mit weiteren Werkzeugmaschinenvorrichtungen, die sich in der Umgebung, insbesondere in einem Umkreis von weniger als 1 km, bevorzugt von weniger als 500 m und besonders bevorzugt von weniger als 100 m Entfernung befinden, vernetzt. Hierdurch sind elektronische Daten zwischen der Werkzeugmaschinenvorrichtung und weiteren Werkzeugmaschinenvorrichtungen zu einer Einstellung von Parametern zu einer Steuerung und/oder Regelung der Antriebseinheit übertragbar. Somit ist die Werkzeugmaschinenvorrichtung vorzugsweise mit weiteren Werkzeugmaschinenvorrichtungen in der Umgebung vernetzbar, wobei Einstellungswerte von Parametern der weiteren Werkzeugmaschinenvorrichtungen zu einer Bearbeitung von Werkstücken infolge der Vernetzung von der Werkzeugmaschinenvorrichtung lernbar sind. Beispielsweise setzt eine Gussputzerei eine Vielzahl von als Winkelschleifern ausgebildete Werkzeugmaschinen ein. Hierbei sind beispielsweise neu erworbene Winkelschleifer mit bereits im Einsatz befindlichen Winkelschleifern mittels vorzugsweise eines Bluetooth-Protokolls vernetzbar, wobei die neu erworbenen Winkelschleifer von den bereits im Einsatz befindlichen Winkelschleifern Voreinstellungen betreffend einer Kickback-Stopp-Funktion, eines Drehzahlverhaltens, eines Überlastschutz usw. lernen. Somit kann vorteilhaft ein Aufwand zu einer manuellen Einstellung einer Werkzeugmaschine durch einen Bediener gering gehalten werden. Ferner setzt beispielsweise eine Möbelschreinerei mit verschiedenen Gewerken verschiedene Werkzeugmaschinen in verschiedenen Applikationen ein. Mittels eines Zig-Bee-Netzwerks sind alle Werkzeugmaschinen miteinander vernetzt. Eine als Handbohrmaschine ausgebildete Werkzeugmaschine der Möbelschreinerei wird beispielsweise zu einem Bohren von Sacklöchern, Durchgangslöchern oder zu einem Gewindeschneiden in Metallbauelementen verwendet. Aufgrund dieser bereits vorhandenen Arbeitsfälle wird einem Anwender eine Vorauswahl dieser Einstellungen präsentiert aus denen er wählen kann. Des Weiteren ist es denkbar, dass über eine Verknüpfung mit einem Standortsensor, wie beispielsweise einem GPS-Sensor, ein Arbeitsfall in Abhängigkeit von einer Entfernung zu einem Standort der Handbohrmaschine von der Werkzeugmaschinenvorrichtung vorausgewählt werden kann. Es kann vorteilhaft eine zumindest teilweise automatische Einstellung von Parametern zu einer Steuerung und/oder Regelung der Antriebseinheit erfolgen.

Zudem wird eine Werkzeugmaschine, insbesondere eine tragbare Werkzeugmaschine mit einer erfindungsgemäßen Werkzeugmaschinenvorrichtung vorgeschlagen. Besonders bevorzugt ist die Werkzeugmaschine als tragbare Werkzeugmaschine ausgebildet. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Hierbei ist die tragbare Werkzeugmaschine vorzugsweise als Winkelschleifer ausgebildet. In einer alternativen Ausgestaltung ist die tragbare Werkzeugmaschine als Bohr- und/oder Meißelhammer ausgebildet. In einer weiteren alternativen Ausgestaltung ist die tragbare Werkzeugmaschine als Stichsäge ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Akkuschraubmaschine, als Schlagbohrmaschine, als Schleifmaschine, als Kreissägemaschine, als Diamantbohrmaschine, als Kettensäge, als Säbelsäge, als Hobelmaschine oder als Gartenwerkzeugmaschine. Mittels der erfindungsgemäßen Ausgestaltung der Werkzeugmaschine kann eine vorteilhafte Anpassung an Einsatzbedingungen ermöglicht werden. Zudem kann vorteilhaft eine auf einen Bediener individuell eingestellte Bearbeitung eines Werkstücks ermöglicht werden. Somit kann vorteilhaft eine präzise und leistungsoptimierte Bearbeitung eines Werkstücks ermöglicht werden.

Ferner wird ein Werkzeugmaschinensystem mit zumindest einer erfindungsgemäßen Werkzeugmaschine und mit zumindest einer externen Einheit, insbesondere einer externen Sensoreinheit vorgeschlagen. Die externe Einheit ist in einer Ausgestaltung des Werkzeugmaschinensystems als externe Geräuschemissionssensoreinheit ausgebildet. Es ist eine Geräuschmessung realisierbar, mittels derer bei einer Überschreitung eines vorgegebenen Geräuschgrenzwerts beispielsweise eine Drehzahlabsenkung der Antriebseinheit durch die Steuer- und/oder Regeleinheit erfolgt. Hierbei kann die externe Einheit beispielsweise als Smartphone ausgebildet sein. Zudem ist die externe Einheit in einer alternativen Ausgestaltung des Werkzeugmaschinensystems als externe Funkenflugerfassungseinheit ausgebildet. Es kann somit vorteilhaft in Abhängigkeit eines erfassten Funkenflugs eine maximale Funkenflugweite eingestellt werden, indem in Abhängigkeit von einem Bearbeitungswerkzeug, einem Werkstoff und/oder einem Anwendungsfall eine Drehzahl der Antriebseinheit durch die Steuer- und/oder Regeleinheit auf eine maximal Flugweite der Funken regelbar ist. Hierzu ist der Funkenflug beispielsweise optisch erfassbar und die Drehzahl zu einer Änderung einer Funkenflugweite anpassbar. Somit sind vorteilhaft Geräuschbelästigungen und/oder Beschädigungen an umliegenden Gegenständen vermeidbar und/oder reduzierbar.

Des Weiteren wird ein Verfahren zu einer Steuerung und/oder Regelung zumindest einer erfindungsgemäßen Werkzeugmaschine vorgeschlagen, wobei das Verfahren zumindest einen Verfahrensschritt umfasst, bei dem die Steuer- und/oder Regeleinheit zumindest einen Bearbeitungswerkzeugzustand ermittelt und den Bearbeitungswerkzeugzustand mittels einer Informationsausgabeeinheit ausgibt und/oder zu einer Steuerung und/oder Regelung der Antriebseinheit der Werkzeugmaschine berücksichtigt. Somit kann vorteilhaft ein Bediener über einen Zustand eines Bearbeitungswerkzeugs informiert werden und/oder es kann vorteilhaft eine Anpassung einer Steuerung und/oder Regelung einer Antriebseinheit an einen Zustand eines Bearbeitungswerkzeugs erfolgen. Somit kann vorteilhaft eine effektive Bearbeitung eines Werkstücks ermöglicht werden. Mittels des erfindungsgemäßen Verfahrens kann vorteilhaft eine zumindest im Wesentlichen automatische Einstellung von Betriebsparametern und/oder Betriebsmodi einer Werkzeugmaschine ermöglicht werden.

Zudem wird vorgeschlagen, dass das Verfahren zumindest einen Verfahrensschritt umfasst, bei dem eine Berücksichtigung zumindest der Antriebseinheitskenngröße und/oder der Bearbeitungswerkzeugkenngröße zu einer Steuerung und/oder Regelung der Antriebseinheit der Werkzeugmaschine in zumindest einem Betriebsmodus der Werkzeugmaschine stetig über eine zumindest im Wesentlichen gesamte Einsatzdauer erfolgt. Somit kann vorteilhaft eine zumindest im Wesentlichen automatische Berücksichtigung von Kenngrößen zu einer Optimierung einer Steuerung und/oder Regelung einer Antriebseinheit während einer Bearbeitung eines Werkstücks erfolgen. Es kann vorteilhaft ein optimales Bearbeiten eines Werkstücks erreicht werden.

Zudem wird vorgeschlagen, dass die Steuer- und/oder Regeleinheit, insbesondere in zumindest einem Betriebsmodus der tragbaren Werkzeugmaschine, zumindest teilweise automatisch mittels der Kommunikationseinheit auf die zentrale Datenbank zugreift, in der zumindest eine Sicherheits- und/oder Betriebsbereichsregel hinterlegt sind/ist, die zumindest zu einer Steuer- und/oder Regelung der Antriebseinheit von der Steuer- und/oder Regeleinheit verarbeitbar sind/ist. Bevorzugt wertet die Steuer- und/oder Regeleinheit die in der zentralen Datenbank hinterlegten Sicherheits- und/oder Betriebsbereichsregeln automatisch aus und interpretiert die Sicherheits- und/oder Betriebsbereichsregeln automatisch zu einer Steuer- und/oder Regelung der tragbaren Werkzeugmaschine. Besonders bevorzugt sind mittels der Kommunikationseinheit zusätzlich zu einem Zugriff auf die zentrale Datenbank mittels der Kommunikationseinheit elektronische Daten mit zumindest einer externen Einheit austauschbar. Somit kann vorzugsweise ein Datenaustausch zwischen der die Werkzeugmaschinenvorrichtung umfassenden tragbaren Werkzeugmaschine und weiteren externen Einheiten stattfinden, wie beispielsweise ein Datenaustausch zwischen der die Werkzeugmaschinenvorrichtung umfassenden tragbaren Werkzeugmaschine und einer Sensoreinheit einer Arbeitskleidung, einem Smartphone, einem Laptop, einem PC, einem Handheld, einem Tablet, einem Server o. dgl. Hierbei sind bevorzugt insbesondere die mittels der Sensoreinheiten der Werkzeugmaschinenvorrichtung erfassten Kenngrößen und/oder die mittels der Kommunikationseinheit übertragenen Daten austauschbar und/oder zu einer Steuer- und/oder Regelung der die Werkzeugmaschinenvorrichtung umfassenden tragbaren Werkzeugmaschine nutzbar. Die Kommunikationseinheit kann hierbei kabelgebundene und/oder kabellose Schnittstellen und/oder Kommunikationsprotokolle aufweisen und/oder nutzen. Die Schnittstellen und/oder Kommunikationsprotokolle können beispielsweise als USB, als Canbus, als Ethernet, insbesondere mit twisted pair Kabeln (CAT5 oder CAT6), als optisches Übertragungsmedium, als KNX, als Powerline, als NFC (Nahbereichskommunikation), als RFID (Nahbereichskommunikation), als Zigbee (Nahbereichskommunikation), als Bluetooth, insbesondere nach dem Standard 4.0 Low Energy (kurze Reichweite), als WLAN, insbesondere nach dem Standard 801.11n (mittlere Reichweite), als GSM oder LTE (Mobilfunknetz), insbesondere für große Reichweiten, o. dgl. ausgebildet sein. Vorzugsweise ist eine externe Einheit, insbesondere ein Smartphone, als Router ausgebildet, der als Vermittlungsstelle zumindest zwischen der Kommunikationseinheit der Werkzeugmaschinenvorrichtung und der zentralen Datenbank und/oder einer weiteren externen Einheit, vorgesehen ist. Hierbei ist es vorteilhaft ein individuell abgestimmtes Firmensmartphone zu verwenden. Mittels der erfindungsgemäßen Ausgestaltung kann vorteilhaft eine zumindest teilweise automatische Berücksichtigung von Sicherheits- und/oder Betriebsbereichsregeln zu einer Steuer- und/oder Regelung zumindest der Antriebseinheit genutzt werden. Somit kann vorteilhaft ein hoher Bedienkomfort und eine sichere Einhaltung von Sicherheitsfunktionen gewährleistet werden.

Des Weiteren wird vorgeschlagen, dass die Steuer- und/oder Regeleinheit zumindest zu einer Steuer- und/oder Regelung der Antriebseinheit werkzeugmaschinensensorerfasste Daten und/oder kommunikationseinheitsübermittelte Daten nutzt. Bevorzugt sind die werkzeugmaschinensensorerfassten Daten, die von der Steuer- und/oder Regeleinheit zu einer Steuer- und/oder Regelung der Antriebseinheit nutzbar sind, mittels zumindest einer der Sensoreinheiten, insbesondere mittels allen Sensoreinheiten, der Werkzeugmaschinenvorrichtung erfassbar. Vorzugsweise sind die kommunikationseinheitsübermittelten Daten mittels der Kommunikationseinheit von einer externen Einheit und/oder von der zentralen Datenbank an die Steuer- und/oder Regeleinheit übertragbar. Hierbei ist es denkbar, dass die kommunikationseinheitsübermittelten Daten beispielsweise mittels zumindest einer Sensoreinheit einer Arbeitskleidung erfassbar sind und mittels der Kommunikationseinheit empfangbar sind und/oder direkt mittels der Kommunikationseinheit aus der zentralen Datenbank auslesbar sind. Die Sensoreinheiten der Werkzeugmaschinenvorrichtung und/oder der externen Einheit umfassen vorzugsweise jeweils zumindest ein Sensorelement zu einer Erfassung zumindest einer Kenngröße. Das Sensorelement kann hierbei beispielsweise als Lagesensor (Magnetfeldsensor o. dgl., zu einer Erfassung einer Lage im Raum), als Bewegungssensor (Geschwindigkeitssensor, Beschleunigungssensor, Drehratensensor o. dgl.), als GPS-Sensor (X, Y, Z auf Erdoberfläche), als Drucksensor (Dehnmessstreifen o. dgl.), als Gassensor (CO2-Sensor; Kohlenmonoxidsensor o. dgl.), als Temperatursensor, als Spannungssensor, als Feuchtigkeitssensor, als pH-Wert-Sensor, als Luftdrucksensor (Barometer), als Pulssensor o. dgl. ausgebildet sein. Mittels der erfindungsgemäßen Ausgestaltung kann vorteilhaft eine Berücksichtigung von ortsabhängigen Sicherheits- und/oder Betriebsbereichsregeln und zudem eine Einbeziehung von werkzeugmaschinensensorerfassten und/oder von kommunikationseinheitsübermittelten Daten zu einer Steuer- und/oder Regelung der tragbaren Werkzeugmaschine genutzt werden. Somit kann vorteilhaft eine hohe Arbeitssicherheit gewährleistet werden.

Ferner wird vorgeschlagen, dass die Steuer- und/oder Regeleinheit in Abhängigkeit von werkzeugmaschinensensorerfassten Daten und/oder von kommunikationseinheitsübermittelten Daten zumindest eine Information mittels einer Informationsausgabeeinheit ausgibt. Somit kann vorteilhaft eine Information an einen Bediener ausgegeben werden, um diesen beispielsweise über eine Zutrittskontrolle zu einem Bereich der Infrastruktur zu informieren. Somit ist vorteilhaft eine Zugangskontrolle zu einem Bereich der Infrastruktur realisierbar. Hierbei ist es denkbar, dass beispielsweise in der zentralen Datenbank hinterlegte Brandschutzregeln dazu führen, dass ein Bediener mit einer bestimmten tragbaren Werkzeugmaschine in definierten Räumen nur mit Genehmigung oder nur in Begleitung einer Werksfeuerwehr arbeiten darf. Zudem ist es vorteilhaft möglich, gefährdete Personen in einer Umgebung und/oder einer unmittelbaren Nähe eines Einsatzorts der tragbaren Werkzeugmaschine mittels optischen und/oder akustischen Signalen zu warnen.

Zudem wird vorgeschlagen, dass die Steuer- und/oder Regeleinheit zumindest eine Betriebsmoduseinstellung der Werkzeugmaschine in Abhängigkeit von werkzeugmaschinensensorerfassten Daten und/oder von kommunikationseinheitsübermittelten Daten steuert und/oder regelt. Somit kann vorteilhaft ein optimaler Betrieb der die Werkzeugmaschinenvorrichtung umfassenden tragbaren Werkzeugmaschine erreicht werden.

Die Steuer- und/oder Regeleinheit interpretiert, kombiniert und/oder wertet vorzugsweise die werkzeugmaschinensensorerfassten Daten und/oder die kommunikationseinheitsübermittelten Daten zu einer Steuer- und/oder Regelung der die Werkzeugmaschinenvorrichtung umfassenden tragbaren Werkzeugmaschine aus. Mittels einer Übertragung von Daten an die zentrale Datenbank ist es vorzugsweise denkbar, dass zumindest teilweise automatisch Arbeitsrapportberichte von Arbeiten erstellbar sind, die von Mitarbeitern des Facility Managements erfassbar und/oder protokollierbar sind. Hierdurch kann vorteilhaft dokumentiert werden, wer, wann, wie lange, mit welcher Art einer tragbaren Werkzeugmaschine an welchem Ort gearbeitet hat. Ereignet sich ein Schadensfall und/oder ein Unfall, so kann vorteilhaft ein automatisch erstelltes Protokoll später für einen Nachweis einer Einhaltung einer Sorgfaltspflicht herangezogen werden.

Infolge einer Festlegung von Gefährdungspotentialen, von Sicherheits- und/oder Betriebsbereichsregeln o. dgl. durch die Health and Safety Engineers (HSE) und/oder das Facility Management (FCM) für Räume, Labore, Werkstätten der Infrastruktur werden in der zentralen Datenbank entsprechende elektronische Daten hinterlegt. Durch die Kommunikation der die Werkzeugmaschinenvorrichtung umfassenden tragbaren Werkzeugmaschine mit der zentralen Datenbank ist beispielsweise mittels einer Ortung von GPS Koordinaten erkennbar, welche tragbare Werkzeugmaschine sich wo innerhalb der Infrastruktur befindet. Insbesondere bei einer zusätzlichen Bedienerdatenübertragung ist insbesondere erfassbar, welcher Bediener, insbesondere mit welchem Ausbildungsstand, sich mit welcher Art einer tragbaren Werkzeugmaschine wo befindet. Hierdurch ist vorteilhaft ein Transportieren einer tragbaren Werkzeugmaschine in einen für diese tragbare Werkzeugmaschine gesperrten Bereich der Infrastruktur erfassbar und die tragbare Werkzeugmaschine ist für eine Inbetriebnahme sperrbar, eine Information an einen Bediener ausgebbar und/oder an die Health and Safety Engineers (HSE) und/oder das Facility Management (FCM) meldbar. Somit kann vorteilhaft eine Zutrittsüberwachung erfolgen. Es kann vorteilhaft überwacht und/oder überprüft werden, in welchen Bereichen der Infrastruktur eine tragbare Werkzeugmaschine eingesetzt werden darf und ob ein Bediener ein Nachweis über eine Nutzungsbefugnis vorlegen muss. Somit kann vorteilhaft eine Überwachung von Regeln hinsichtlich einer Alleinarbeit erfolgen und/oder es kann eine automatische Ein-Mann-Überwachung durch zumindest ein Sensorelement der Arbeitskleidung in Kombination mit Sensoreinheiten der Werkzeugmaschinenvorrichtung erfolgen.

Weiter ist es denkbar, dass in der zentralen Datenbank elektronische Daten durch beispielsweise einen Health and Safety Engineer (HSE) und/oder das Facility Management (FCM) hinterlegt werden, die Grenzwerte für Umgebungsbedingungen definieren, wie beispielsweise Temperaturgrenzwerte, Luft- und/oder Gaskonzentrationsgrenzwerte. Infolge einer Übertragung der elektronischen Daten aus der zentralen Datenbank und einer Übertragung von werkzeugmaschinensensorerfassten Daten an die zentrale Datenbank ist vorteilhaft eine Überwachung und/oder ein Nachweis einer Einhaltung von Grenzwerten möglich.

Ferner ist es denkbar, dass mittels den durch die Kommunikationseinheit übertragenen elektronischen Daten ein Abgleich einer Nutzungsbefugnis erfolgt. Hierbei ist beispielsweise ein Ausbildungs- und/oder Einweisungsnachweis des Bedieners durch eine Eingabe (Chipkarte, RFID-Chip o. dgl.) oder durch ein Abgleich eines in der zentralen Datenbank hinterlegten Bedienerkennungsprofils denkbar, um eine Inbetriebnahme der tragbaren Werkzeugmaschine zu ermöglichen. Falls eine Inbetriebnahme ohne korrekten Nachweis erfolgt, ist die tragbare Werkzeugmaschine beispielsweise sperrbar oder es ist beispielsweise eine Warnung mittels der Informationsausgabeeinheit ausgebbar oder eine Leitzentrale ist informierbar.

Zudem ist es auch denkbar, dass mittels der Kommunikationseinheit Daten der tragbaren Werkzeugmaschine, wie beispielsweise Laufzeit, Vibrationen, Akkukapazität, Kühleinheitsleistung, Motorleistung o. dgl., an eine bedienerseitige Einheit, wie beispielsweise ein User-Interface, eine Armbanduhr, ein Smartphone, eine Datenbrille o. dgl., übermittelbar sind. Die Daten der tragbaren Werkzeugmaschine sind zudem an die zentrale Datenbank übertragbar, um beispielsweise eine Einhaltung von Grenzwerten überwachen zu können. Zudem sind beispielsweise Mitarbeiter einer Fremdfirma, die sich innerhalb der Infrastruktur aufhalten, überwachbar. Somit sind/ist beispielsweise eine Arbeitsdauer und/oder ein Arbeitsort der Mitarbeiter der Fremdfirma protokollierbar. Ferner ist mittels einer Übertragung von elektronischen Daten mittels der Kommunikationseinheit durch die Steuer- und/oder Regeleinheit vorzugsweise ein Bedienerprofil einrichtbar. Hierbei sind vorzugsweise durch die Steuer- und/oder Regeleinheit automatisch bei einer Übertragung von Daten mittels der Kommunikationseinheit Einstellungen der tragbaren Werkzeugmaschine vornehmbar, wie beispielsweise Berechtigungseinstellungen, Einstellung einer bevorzugten Motorkennline, Einstellung eines Ansprechverhaltens von Sicherheitsfunktionen (Kick-Back-Funktion etc.) o. dgl.

Des Weiteren ist insbesondere infolge eines Abgleichs von elektronischen Daten aus der zentralen Datenbank, von werkzeugmaschinensenorerfassten Daten und von mittels zumindest einer Sensoreinheit einer Arbeitskleidung eines Bedieners erfassten Daten eine automatische Überwachung einer Tragepflicht von einer persönlichen Schutzausrüstung (PSA), die beispielsweise einen Helm, zumindest einen Handschuh, zumindest eine Schutzbrille, Sicherheitsschuhe, eine Arbeitshose o. dgl. aufweist, und/oder eine Überwachung einer Einsatzorteinschränkung einer tragbaren Werkzeugmaschine erreichbar. Hierbei ist es denkbar, dass von einer Leitzentrale eine Not-Abschaltung der tragbaren Werkzeugmaschine in einem Bereich der Infrastruktur veranlassbar ist, sobald zumindest eine Vitalkenngröße eines Bedieners einen für einen Bediener kritischen Wert erreicht.

Zudem kann vorteilhaft mittels einer Übertragung von elektronischen Daten von einer zentralen Datenbank aus eine zentrale Updatefunktion für die tragbare Werkzeugmaschine ermöglicht werden. Ferner kann vorteilhaft eine fällige Wartung, wie beispielsweise ein Kohlenwechsel, an eine Leitzentrale übermittelt werden.

Die erfindungsgemäße Werkzeugmaschinenvorrichtung, die erfindungsgemäße Werkzeugmaschine und/oder das erfindungsgemäße Verfahren sollen/soll hierbei nicht auf die oben beschriebene Anwendung und Ausführungsform beschränkt sein. Insbesondere können/kann die erfindungsgemäße Werkzeugmaschinenvorrichtung, die erfindungsgemäße Werkzeugmaschine und/oder das erfindungsgemäße Verfahren zu einer Erfüllung einer hierin beschriebenen Funktionsweise eine von einer hierin genannten Anzahl von einzelnen Elementen, Bauteilen, Einheiten und/oder Verfahrensschritten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine, die als Winkelschleifer ausgebildet ist, mit zumindest einer erfindungsgemäßen Werkzeugmaschinenvorrichtung in einer schematischen Darstellung,
- Fig. 2: eine schematische Darstellung der erfindungsgemäßen Werkzeugmaschinenvorrichtung,
- Fig. 3: eine schematische Darstellung einer alternativen erfindungsgemäßen Werkzeugmaschinenvorrichtung,
- Fig. 4: eine alternative erfindungsgemäße Werkzeugmaschine, die als Bohr- und/oder Meißelhammer ausgebildet ist, mit einer erfindungsgemäßen Werkzeugmaschinenvorrichtung in einer schematischen Darstellung,
- Fig. 5: eine weitere alternative erfindungsgemäße Werkzeugmaschine, die als Akkuschrauber ausgebildet ist, mit einer erfindungsgemäßen Werkzeugmaschinenvorrichtung in einer schematischen Darstellung und
- Fig. 6: eine weitere alternative erfindungsgemäße Werkzeugmaschine, die als Stichsäge ausgebildet ist, mit einer erfindungsgemäßen Werkzeugmaschinenvorrichtung in einer schematischen Darstellung.

### Beschreibung der Ausführungsbeispiele

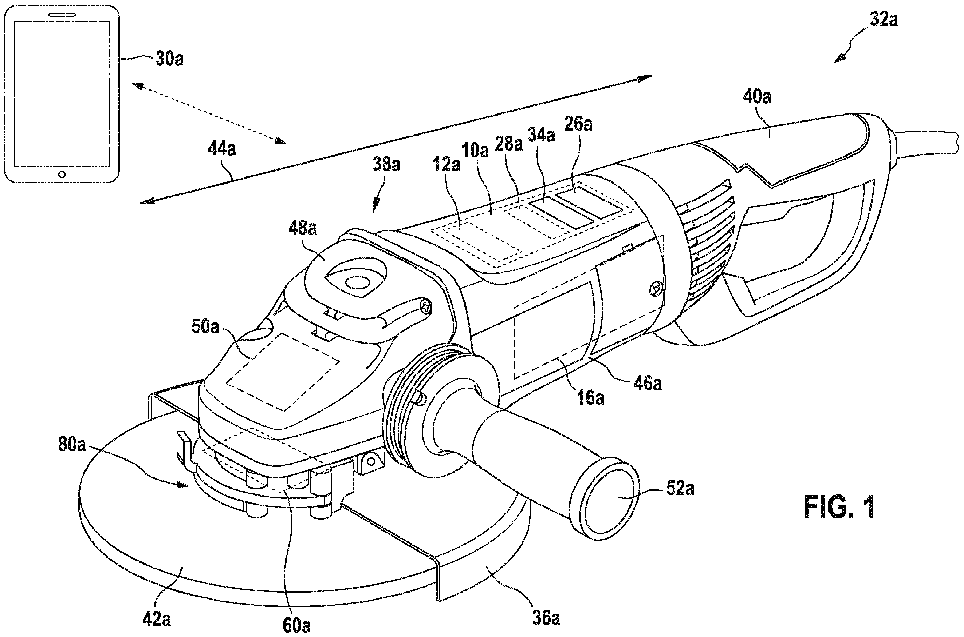

Figur 1 zeigt eine Werkzeugmaschine 32a mit zumindest einer Werkzeugmaschinenvorrichtung 10a. Die Werkzeugmaschine 32a ist als tragbare Werkzeugmaschine ausgebildet. Hierbei ist die Werkzeugmaschine 32a als Winkelschleifer ausgebildet. Somit umfasst die Werkzeugmaschine 32a zumindest eine als Schutzhaubeneinheit ausgebildete Werkzeugmaschinenzubehöreinheit 36a. Ferner umfasst die Werkzeugmaschine 32a zumindest ein Werkzeugmaschinengehäuse 38a und einen Haupthandgriff 40a, der sich an einer einem Bearbeitungswerkzeug 42a abgewandten Seite des Werkzeugmaschinengehäuses 38a in Richtung einer Haupterstreckungsrichtung 44a der Werkzeugmaschine 32a erstreckt. Das Bearbeitungswerkzeug 42a ist hierbei als Schleifscheibe ausgebildet. Es ist jedoch auch denkbar, dass das Bearbeitungswerkzeug 42a als Trenn- oder Polierscheibe ausgebildet ist. Das Werkzeugmaschinengehäuse 38a umfasst ein Motorgehäuse 46a zu einer Aufnahme einer Antriebseinheit 16a der Werkzeugmaschine 32a. Ferner umfasst das Werkzeugmaschinengehäuse 38a ein Getriebegehäuse 48a zu einer Aufnahme einer Abtriebseinheit 50a der Werkzeugmaschine 32a. Die Antriebseinheit 16a ist dazu vorgesehen, das Bearbeitungswerkzeug 42a über die Abtriebseinheit 50a rotierend anzutreiben. An dem Getriebegehäuse 48a ist eine weitere als Zusatzhandgriffeinheit ausgebildete Werkzeugmaschinenzubehöreinheit 52a angeordnet. Die als Zusatzhandgriffeinheit ausgebildete Werkzeugmaschinenzubehöreinheit 52a erstreckt sich quer zur Haupterstreckungsrichtung 44a der Werkzeugmaschine 32a.

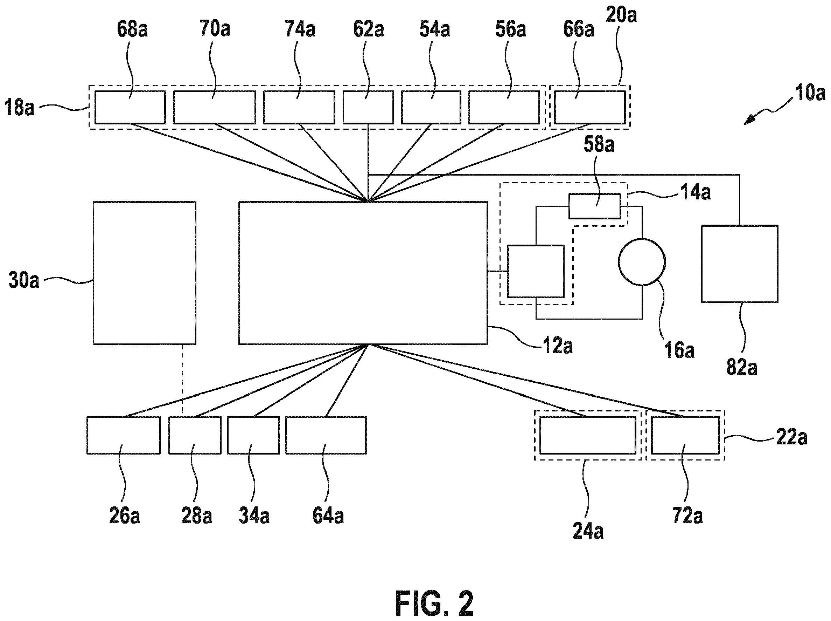

Die Werkzeugmaschinenvorrichtung 10a ist als Handwerkzeugmaschinenvorrichtung ausgebildet. Die Werkzeugmaschinenvorrichtung 10a umfasst vorzugsweise eine Energieversorgungsvorrichtung 82a (Figur 2). Somit ist die Werkzeugmaschinenvorrichtung 10a unabhängig von einer Energieversorgung der Werkzeugmaschine 32a betreibbar. Es ist jedoch auch denkbar, dass in einer alternativen Ausgestaltung der Werkzeugmaschinenvorrichtung 10a die Werkzeugmaschinenvorrichtung 10a mittels einer Energieversorgungsvorrichtung der Werkzeugmaschine 32a mit Energie versorgbar ist. Die Werkzeugmaschinenvorrichtung 10a umfasst ferner zumindest eine Steuer- und/oder Regeleinheit 12a und zumindest eine Antriebseinheitssensoreinheit 14a zu einer Erfassung zumindest einer Antriebseinheitskenngröße, die zumindest zu einer Steuerung und/oder Regelung einer Antriebseinheit 16a der Werkzeugmaschine 32a und/oder zu einer Informationsausgabe an einen Bediener von der Steuer- und/oder Regeleinheit 12a verarbeitbar ist. Die Steuer- und/oder Regeleinheit 12a ist in zumindest einem Betriebsmodus der Werkzeugmaschine 32a zu einer Steuerung und/oder Regelung der Antriebseinheit 16a in Abhängigkeit von der zumindest einen mittels der Antriebseinheitssensoreinheit 14a erfassten Antriebseinheitskenngröße vorgesehen.

Des Weiteren umfasst die Werkzeugmaschinenvorrichtung 10a zumindest eine Bearbeitungswerkzeugsensoreinheit 18a zu einer Erfassung zumindest einer Bearbeitungswerkzeugkenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Die Steuer- und/oder Regeleinheit 12a ist zu einer Steuerung und/oder Regelung der Antriebseinheit 16a in Abhängigkeit von der zumindest einen mittels der Antriebseinheitssensoreinheit 14a erfassten Antriebseinheitskenngröße vorgesehen. Hierbei verarbeitet die Steuer- und/oder Regeleinheit 12a in zumindest einem Betriebsmodus die zumindest eine mittels der Bearbeitungswerkzeugsensoreinheit 18a erfasste Bearbeitungswerkzeugkenngröße zu einer Bestimmung eines Werkzeugtyps des an einer Werkzeugaufnahme 80a der Werkzeugmaschine 32a angeordneten Bearbeitungswerkzeugs 42a.

Ferner umfasst die Werkzeugmaschinenvorrichtung 10a zumindest eine Werkzeugmaschinenzubehörsensoreinheit 24a zu einer Erfassung zumindest einer Werkzeugmaschinenzubehörkenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Die Steuer- und/oder Regeleinheit 12a ist in zumindest einem Betriebsmodus der Werkzeugmaschine 32a zu einer Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels der Bearbeitungswerkzeugsensoreinheit 18a erfassten Bearbeitungswerkzeugkenngröße und in Abhängigkeit von der zumindest einen mittels der Werkzeugmaschinenzubehörsensoreinheit 24a erfassten Werkzeugmaschinenzubehörkenngröße vorgesehen. Hierbei ist die Steuer- und/oder Regeleinheit 12a zumindest in einem Anlernstartbetriebsmodus zu einer zumindest teilweisen automatischen Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels der Bearbeitungswerkzeugsensoreinheit 18a erfassten Bearbeitungswerkzeugkenngröße und in Abhängigkeit von der zumindest einen mittels der Werkzeugmaschinenzubehörsensoreinheit 24a erfassten Werkzeugmaschinenzubehörkenngröße vorgesehen. Der Anlernstartbetriebsmodus ist automatisch nach einer Inbetriebnahme der Werkzeugmaschine 32a bis zu einem Erreichen einer Leerlaufdrehzahl aktiviert. Über zumindest einen Trägheitssensor 54a der Bearbeitungswerkzeugsensoreinheit 18a, zumindest einen Drehmomentsensor 56a der Bearbeitungswerkzeugsensoreinheit 18a und/oder einen Stromsensor 58a der Antriebseinheitssensoreinheit 14a ist eine Schwungmasse des Bearbeitungswerkzeugs 42a mittels der Steuer- und/oder Regeleinheit 12a ermittelbar (Figur 2). Der Trägheitssensor 54a ist vorzugsweise als dreiachsiger Beschleunigungssensor ausgebildet. Über zumindest ein in einer Speichereinheit (hier nicht näher dargestellt) der Steuer- und/oder Regeleinheit 12a abgelegtes Kennfeld ist die ermittelte Schwungmasse eindeutig einer bestimmten Bearbeitungswerkzeugart und/oder eines Werkzeugtyps des Bearbeitungswerkzeugs 42a zuordenbar. Zudem ist es denkbar, dass eine Erfassung von weiteren Bearbeitungswerkzeugkenngrößen zusätzlich über RFID, NFC, Scannen eines Barcodes, DataMatrix-Codes o.ä. erfolgt. In Abhängigkeit von dem durch die Steuer- und/oder Regeleinheit 12a ermittelten Bearbeitungswerkzeug 42a, sind Antriebseinheitsparameter zu einer Steuerung und/oder Regelung der Antriebseinheit 16a anpassbar und/oder veränderbar.

Im Anlernstartbetriebsmodus der Werkzeugmaschine 32a ist eine für das Bearbeitungswerkzeug 42a optimale Drehzahl in Abhängigkeit von einem Material (Stahl, Edelstahl, Stein, Beton, Holz usw.) eines zu bearbeitenden Werkstücks mittels der Steuer- und/oder Regeleinheit 12a zumindest teilweise automatisch einstellbar. Hierzu umfasst die Werkzeugmaschinenvorrichtung 10a zumindest eine Werkstücksensoreinheit 22a zu einer Erfassung zumindest einer Werkstückkenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Hierbei ist die Steuer- und/oder Regeleinheit 12a zumindest im Anlernstartbetriebsmodus zu einer zumindest teilweise automatischen Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels der Bearbeitungswerkzeugsensoreinheit 18a erfassten Bearbeitungswerkzeugkenngröße, in Abhängigkeit von der zumindest einen mittels der Werkzeugmaschinenzubehörsensoreinheit 24a erfassten Werkzeugmaschinenzubehörkenngröße und in Abhängigkeit von der zumindest einen mittels der Werkstücksensoreinheit 22a erfassten Werkstückkenngröße vorgesehen.

Ferner sind im Anlernstartbetriebsmodus der Werkzeugmaschine 32a Auffälligkeiten hinsichtlich einer Vibration des Bearbeitungswerkzeugs 42a während eines Hochfahrens bis zu einer Leerlaufdrehzahl der Antriebseinheit 16a erfassbar. Hierdurch ist eine falsche Montage, ein Verschleiß und/oder ein Defekt des Bearbeitungswerkzeugs 42a erfassbar. Mittels der Steuer- und/oder Regeleinheit 12a ist somit über eine Informationsausgabeeinheit 34a der Werkzeugmaschinenvorrichtung 10a eine Information an einen Bediener ausgebbar und/oder die Antriebseinheit 16a ist aktiv abbremsbar und/oder eine Energieversorgung zur Antriebseinheit 16a ist unterbrechbar. Zudem ist infolge einer Ermittlung des Bearbeitungswerkzeugs 42a eine maximal für das Bearbeitungswerkzeug 42a geeignete Drehzahl der Antriebseinheit 16a einstellbar. Somit ermittelt die Steuer- und/oder Regeleinheit 12a zumindest im Anlernstartbetriebsmodus einen Bearbeitungswerkzeugzustand und gibt den Bearbeitungswerkzeugzustand mittels der Informationsausgabeeinheit 34a aus und/oder berücksichtigt den Bearbeitungswerkzeugzustand zu einer Steuerung und/oder Regelung der Antriebseinheit 16a der Werkzeugmaschine 32a.

Zudem weist die Werkzeugmaschine 32a zumindest eine Bearbeitungswerkzeugsicherungseinheit 60a auf, die zumindest ein Sicherungselement (hier nicht näher dargestellt) zu einer Sicherung des Bearbeitungswerkzeugs 42a an der Werkzeugaufnahme 80a der Werkzeugmaschine 32a umfasst. Hierbei weist die Bearbeitungswerkzeugsensoreinheit 18a zumindest ein Sicherungssensorelement 62a auf, das dazu vorgesehen ist, eine sichere Befestigung des Bearbeitungswerkzeugs 42a an der Werkzeugaufnahme 80a zu überwachen. Erfasst das Sicherungssensorelement 62a einen gelösten Zustand des Bearbeitungswerkzeugs 42a, ist mittels der Steuer- und/oder Regeleinheit 12a eine Energieversorgung der Antriebseinheit 16a unterbindbar. Somit ist eine Inbetriebnahme der Antriebseinheit 16a gesperrt. Hierbei ist es denkbar, dass eine Antriebsspindel und/oder eine Spannmutter der Werkzeugmaschine 32a eine Bohrung aufweist, in die das Sicherungselement einführbar ist, insbesondere über einen Stellmotor einführbar, dessen Position mittels des Sicherungssensorelements 62a erfassbar ist. Ferner ist auch denkbar, dass ein als Spannmutter ausgebildetes Sicherungselement mittels einer zumindest teilweise automatischen Anzieheinheit bis zu einem definierten Drehmoment vorspannbar ist, wobei das Drehmoment mittels des Drehmomentsensors 56a erfassbar ist.

Des Weiteren ist in einer Ausgestaltung der Werkzeugmaschinenvorrichtung 10a in dem als Spannmutter ausgebildeten Sicherungselement ein Schwingungserregerelement 64a (Figur 2) der Werkzeugmaschinenvorrichtung 10a angeordnet, mittels dessen eine sichere Anordnung des Bearbeitungswerkzeugs 42a auf der Antriebsspindel überprüfbar ist. Das Schwingungserregerelement 64a kann als Smart-Material-Element, als Piezo-Element, als Schwingspulenelement oder als ein anderes, einem Fachmann als sinnvoll erscheinendes Erregerelement ausgebildet sein. Hierbei ist das Bearbeitungswerkzeug 42a mittels des Schwingungserregerelements 64a in Schwingung versetzbar, die mittels der Bearbeitungswerkzeugsensoreinheit 18a erfassbar ist und mittels der Steuer- und/oder Regeleinheit 12a auswertbar ist. Das Bearbeitungswerkzeug 42a ist ferner mittels der Steuer- und/oder Regeleinheit 12a in Abschnitte unterteilbar, wobei jeder Abschnitt einzeln hinsichtlich einer Schwingung durch die Steuer- und/oder Regeleinheit 12a auswertbar ist. Somit kann vorteilhaft eine Beschädigung des Bearbeitungswerkzeugs 42a in einem Abschnitt erkannt werden. Weitere, einem Fachmann als sinnvoll erscheinende Ausgestaltungen zu einer Erfassung von Bearbeitungswerkzeugkenngrößen sind ebenfalls denkbar.

Des Weiteren umfasst die Werkzeugmaschinenvorrichtung 10a zumindest eine Bedienersensoreinheit 20a zu einer Erfassung zumindest einer bedienerspezifischen Kenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Die Bedienersensoreinheit 20a umfasst zumindest ein Bedienersensorelement 66a (Figur 2), das dazu vorgesehen ist, zumindest eine bedienerspezifische Kenngröße zu erfassen. Das Bedienersensorelement 66a ist hierbei als Schwingungsensor, insbesondere als dreiachsiger Beschleunigungssensor, ausgebildet. Mittels der Bedienersensoreinheit 20a ist insbesondere eine auf einen Bediener einwirkende Schwingung am Werkzeugmaschinengehäuse 38a und/oder am Haupthandgriff 40a erfassbar. Mittels der Steuer- und/oder Regeleinheit 12a ist bei einem Erreichen einer Resonanz und/oder einem maximalen Schwingungswert eine Drehzahl änderbar. Zudem ist mittels der Bedienersensoreinheit 20a ein Anpressdruck und/oder eine Anpresskraft eines Bedieners auf die Werkzeugmaschine 32a erfassbar.

Ferner umfasst die Werkzeugmaschinenvorrichtung 10a zumindest eine Eingabeeinheit 26a zu einer Eingabe zumindest einer Bearbeitungskenngröße, die zumindest zu einer Steuerung und/oder Regelung der Antriebseinheit 16a von der Steuer- und/oder Regeleinheit 12a verarbeitbar ist. Mittels der Eingabeeinheit 26a ist zumindest eine Steuerung und/oder Regelung der Antriebseinheit 16a durch die Steuer- und/oder Regeleinheit 12a beeinflussbar. Zudem ist mittels der Eingabeeinheit 26a ein Betriebsmodus der Werkzeugmaschine 32a einstellbar. Hierbei weist die Werkzeugmaschine 32a zumindest den Anlernstartbetriebsmodus, einen Lernbetriebsmodus, einen Referenzbetriebsmodus, einen Synchronisationsbetriebsmodus und/oder einen Automatikbetriebsmodus auf. Hierbei ist die Steuer- und/oder Regeleinheit 12a zumindest im Anlernstartbetriebsmodus zu einer zumindest teilweisen automatischen Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels der Bearbeitungswerkzeugsensoreinheit 18a erfassten Bearbeitungswerkzeugkenngröße und in Abhängigkeit von der zumindest einen mittels der Werkzeugmaschinenzubehörsensoreinheit 24a erfassten Werkzeugmaschinenzubehörkenngröße vorgesehen.

Im Lernbetriebsmodus ist die Steuer- und/oder Regeleinheit 12a zu einer zumindest teilweisen automatischen Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels der Bearbeitungswerkzeugsensoreinheit 18a erfassten Bearbeitungswerkzeugkenngröße, in Abhängigkeit von der zumindest einen mittels der Werkzeugmaschinenzubehörsensoreinheit 24a erfassten Werkzeugmaschinenzubehörkenngröße, in Abhängigkeit von der zumindest einen mittels der Bedienersensoreinheit 20a erfassten bedienerspezifischen Kenngröße und in Abhängigkeit von der zumindest einen mittels der Eingabeeinheit 26a eingegebenen Bearbeitungskenngröße vorgesehen. Der Lernbetriebsmodus wird hierbei nach einem Aktivieren mittels der Eingabeeinheit 26a bis zu einem Umschalten in einen anderen Betriebsmodus der Werkzeugmaschine 32a oder bis zu einem Abschalten der Werkzeugmaschine 32a durchgeführt. Solange der Lernbetriebsmodus aktiviert ist, werden alle oben genannten Kenngrößen mittels den jeweiligen Sensoreinheiten ständig überwacht und Parameter und/oder Kennlinien der Antriebseinheit 16a mittels der Steuer- und/oder Regeleinheit 12a angepasst.

Im Lernbetriebsmodus ist zumindest im Wesentlichen automatisch mittels der Bearbeitungswerkzeugsensoreinheit 18a ein Bearbeitungswerkzeugdurchmesser während einer Bearbeitung eines Werkstücks überwachbar. Hierzu umfasst die Bearbeitungswerkzeugsensoreinheit 18a zumindest ein Bearbeitungswerkzeugsensorelement 68a, das beispielsweise als Drehmomentsensor, als Drehzahlsensor, als optischer Sensor (Lichtschranke, Kamera usw.) o. dgl. ausgebildet ist. Die Steuer- und/oder Regeleinheit 12a ist hierbei dazu vorgesehen, infolge einer erfassten Bearbeitungswerkzeugdurchmesserabnahme eine Drehzahl auf eine maximale Umfangsgeschwindigkeit, wie beispielsweise 80m/s, nachzuregeln. Es kann somit vorteilhaft eine gleichbleibende Schnittgeschwindigkeit und damit ein gleichbleibender Arbeitsfortschritt erreicht werden. Zudem ist im Lernbetriebsmodus eine Dauer einer Bearbeitungsart erfassbar. Somit ist bei einer kurzen Dauer einer Bearbeitungsart eine Stromgrenze der Antriebseinheit 16a mittels der Steuer- und/oder Regeleinheit 12a hochsetzbar, wie beispielsweise bei einer Trennbearbeitungsart von Profilen usw. Es kann somit ein hoher Arbeitsfortschritt und durch die geringe Dauer eine akzeptable Überlast für die Antriebseinheit 16a erreicht werden. Bei einer langen Dauer einer Bearbeitungsart ist die Stromgrenze mittels der Steuer- und/oder Regeleinheit 12a nach unten setzbar, um eine geringe Überlastung und damit eine lange Lebensdauer der Antriebseinheit 16a zu erreichen. Zudem ist mittels der Bearbeitungswerkzeugsensoreinheit 18a eine Bearbeitungsart erkennbar. Hierzu umfasst die Bearbeitungswerkzeugsensoreinheit 18a zumindest ein zusätzliches Bearbeitungswerkzeugsensorelement 74a, das als Drucksensor ausgebildet ist. Mittels des zusätzlichen Bearbeitungswerkzeugsensorelements 74a, das an der Antriebsspindel angeordnet ist, ist erkennbar, ob mittels des Bearbeitungswerkzeugs 42a ein Schrupparbeitsgang oder ein Schleifarbeitsgang durchgeführt wird. Zudem ist es denkbar, dass die Bearbeitungswerkzeugsensoreinheit 18a einen Kraftsensor umfasst, der zu einer Erkennung einer Bearbeitungsart vorgesehen ist.

Des Weiteren ist im Lernbetriebsmodus zumindest im Wesentlichen automatisch mittels der Bearbeitungswerkzeugsensoreinheit 18a ein Aufschwingen des Bearbeitungswerkzeugs 42a und/oder mittels der Werkstücksensoreinheit 22a ein Aufschwingen eines Werkstücks erkennbar. Hierzu weist die Bearbeitungswerkzeugsensoreinheit 18a ein als Beschleunigungssensor ausgebildetes weiteres Bearbeitungswerkzeugsensorelement 70a auf und/oder die Werkstücksensoreinheit 22a weist ein als Beschleunigungssensor ausgebildetes Werkstücksensorelement 72a auf. Infolge einer Erfassung eines Aufschwingens des Bearbeitungswerkzeugs 42a und/oder des Werkstücks ist mittels der Steuer- und/oder Regeleinheit 12a eine Drehzahl der Antriebseinheit 16a derart veränderbar, dass das Bearbeitungswerkzeug 42a und/oder das Werkstück aus einem kritischen Schwingungsfrequenzbereich gelangt (z.B. bei Blechbearbeitung). Ferner ist im Lernbetriebsmodus zumindest im Wesentlichen automatisch mittels der Bearbeitungswerkzeugsensoreinheit 18a ein so genanntes Verglasen des Bearbeitungswerkzeugs 42a erkennbar. Infolge einer Erkennung einer Verglasung des Bearbeitungswerkzeugs 42a ist mittels der Steuer- und/oder Regeleinheit 12a zumindest im Wesentlichen automatisch ein Entglasungslauf und/oder ein Reinigungslauf einleitbar. Hierbei ist eine geringe Drehzahl der Antriebseinheit 16a einstellbar, die mit Impulsen überlagert ist. Hierdurch kann ein Wegbrechen der Verglasung erreicht werden. Somit erfolgt zumindest im Lernbetriebsmodus eine stetige Berücksichtigung zumindest der Antriebseinheitskenngröße und/oder der Bearbeitungswerkzeugkenngröße zu einer Steuerung und/oder Regelung der Antriebseinheit 16a der Werkzeugmaschine 32a über eine zumindest im Wesentlichen gesamte Einsatzdauer.

Im Referenzbetriebsmodus der Werkzeugmaschine 32a, der von einem Bediener mittels der Eingabeeinheit 26a aktivierbar ist, ist eine Kennlinie der Antriebseinheit 16a mittels der Steuer- und/oder Regeleinheit 12a an eine sich wiederholende Bearbeitungstätigkeit anpassbar. Hierbei wird ein Referenzlauf durchgeführt, bei dem Kenngrößen zu einer Einstellung der Antriebseinheit 16a mittels der Bearbeitungswerkzeugsensoreinheit 18a, der Werkstücksensoreinheit 22a, der Bedienersensoreinheit 20a und/oder der Werkzeugmaschinenzubehörsensoreinheit 24a erfassbar sind. Die somit erfassten Kenngrößen werden mittels der Steuer- und/oder Regeleinheit 12a als Kennlinie für einen Bearbeitungsvorgang in der Speichereinheit abgelegt. Die Antriebseinheit 16a wird hierbei so lange mit der gespeicherten Kennlinie betrieben, bis ein weiterer Referenzlauf durchgeführt wird oder bis ein neuer Betriebsmodus ausgewählt wird. Der Referenzbetriebsmodus ist vorteilhaft nutzbar bei einer gleichbleibenden Anwendung der Werkzeugmaschine 32a zu einer Bearbeitung von Werkstücken, wie beispielsweise ein Trennen eines gleichbleibenden Werkstückprofils usw. Mittels der Steuer- und/oder Regeleinheit 12a ist die Antriebseinheit 16a vorteilhaft auf einen optimalen Arbeitspunkt einstellbar und ein Bediener kann vorteilhaft einen optimalen Arbeitsfortschritt erzielen. Zudem umfasst die Steuer- und/oder Regeleinheit 12a zumindest die Speichereinheit, in der zumindest ein Einstellungsparameter zu einer Steuerung und/oder einer Regelung der Antriebseinheit 16a speicherbar ist, der zumindest von zumindest einer vorangegangenen Bearbeitung eines Werkstücks abhängig ist. Die Steuer- und/oder Regeleinheit 12a verarbeitet in zumindest einem Betriebsmodus zu einer Ermöglichung einer sich wiederholenden Bearbeitungstätigkeit den in der Speichereinheit gespeicherten Einstellungsparameter. Der Referenzbetriebsmodus ist solange aktiviert, bis von einem Bediener mittels der Eingabeeinheit 26a ein anderer Betriebsmodus ausgewählt wird oder bis die Werkzeugmaschine 32a ausgeschaltet wird.

Im Synchronisationsbetriebsmodus der Werkzeugmaschine 32a ist zumindest im Wesentlichen automatisch eine Verbindung zu einer externen Einheit 30a herstellbar. Hierzu umfasst die Werkzeugmaschinenvorrichtung 10a zumindest eine Kommunikationseinheit 28a zu einer Kommunikation mit zumindest der externen Einheit 30a zu einem Austausch von elektronischen Daten zumindest zu einer Steuerung und/oder Regelung der Antriebseinheit 16a. Es sind hierbei Kennlinienfelder zu einer Steuerung und/oder Regelung der Antriebseinheit 16a mittels der Kommunikationseinheit 28a übertragbar. Hierbei sind Parameter und/oder Kennlinien zu einer Steuerung und/oder Regelung der Antriebseinheit 16a in der externen Einheit 30a hinterlegt, die infolge einer Verbindung zwischen der externen Einheit 30a und der Kommunikationseinheit 28a an die Steuer- und/oder Regeleinheit 12a übertragbar sind. Bei den Parametern und/oder Kennlinien kann es sich um individuelle Einstellungen eines Bedieners, wie beispielsweise ein schnelles Hochlaufen bis zu einer gewünschten Drehzahl der Antriebseinheit 16a, um Vorgaben einer Firma, wie beispielsweise eine Bearbeitung von Werkstücken ist in einem gefährdeten Bereich nur unter Einhaltung von Sicherheitszubehör durchführbar o. dgl. handeln. Die Werkzeugmaschine 32a und die externe Einheit 30a bilden hierbei ein Werkzeugmaschinensystem.

Zudem ist im Synchronisationsbetriebsmodus ein Abgleich eines Auftrags eines Bedieners mit einem in der externen Einheit 30a hinterlegten Bearbeitungsauftrag erreichbar. Es findet ein Abgleich von der im Auftrag genannten Werkzeugart, Bearbeitungsart und/oder Werkstückart statt. Zudem ist im Synchronisationsbetriebsmodus eine Zugangsberechtigung erteilbar und/oder in Abhängigkeit einer Zugangsberechtigung ist eine Inbetriebnahme der Werkzeugmaschine 32a sperrbar und/oder freigebbar.

Zudem sind im Synchronisationsbetriebsmodus Vibrationswerte, die mittels der Bedienersensoreinheit 20a erfassbar sind, an die externe Einheit 30a übermittelbar, die zu einer Bezahlung von Zulagen oder zu einer Überwachung einer Vibrationsdosis eines Bedieners pro Tag nutzbar sind. Ferner ist eine Laufzeit und eine Belastungsart der Werkzeugmaschine 32a erfassbar, die an die externe Einheit 30a übermittelbar sind. Hierdurch ist mittels der Informationsausgabeeinheit 34a ein Vorschlag für ein anderes Bearbeitungswerkzeug und/oder eine andere Werkzeugmaschine ausgebbar. Ferner adaptiert die Steuer- und/oder Regeleinheit 12a, insbesondere im Synchronisationsbetriebsmodus, zumindest einen in einer Speichereinheit der Steuer- und/oder Regeleinheit 12a abgespeicherten Parameter zu einer Steuerung und/oder Regelung der Antriebseinheit 16a in Abhängigkeit von mittels der Kommunikationseinheit 28a übertragenen elektronischen Daten.

Ferner ist die Steuer- und/oder Regeleinheit 12a dazu vorgesehen, mittels der Kommunikationseinheit 28a auf eine zentrale Datenbank zuzugreifen, in der zumindest eine Sicherheits- und/oder Betriebsbereichsregel hinterlegt sind/ist, die zumindest zu einer Steuer- und/oder Regelung der Antriebseinheit 16a von der Steuer- und/oder Regeleinheit 12a verarbeitbar sind/ist. Hierbei greift die Steuer- und/oder Regeleinheit 12a in zumindest einem Betriebsmodus zumindest teilweise automatisch mittels der Kommunikationseinheit 28a auf die zentrale Datenbank zu, in der zumindest eine Sicherheits- und/oder Betriebsbereichsregel hinterlegt sind/ist, die zumindest zu einer Steuer- und/oder Regelung der Antriebseinheit 16a von der Steuer- und/oder Regeleinheit 12a verarbeitbar sind/ist. Somit nutzt die Steuer- und/oder Regeleinheit 12a zumindest zu einer Steuer- und/oder Regelung der Antriebseinheit 16a werkzeugmaschinensensorerfasste Daten und/oder kommunikationseinheitsübermittelte Daten. Ferner gibt die Steuer- und/oder Regeleinheit 12a in Abhängigkeit von werkzeugmaschinensensorerfassten Daten und/oder kommunikationseinheitsübermittelten Daten zumindest eine Information mittels einer Informationsausgabeeinheit 34a der Werkzeugmaschinenvorrichtung 10a aus, insbesondere zu einer Information eines Bedieners über einen Werkzeugmaschinenzustand und/oder zu einer Warnung vor einer Gefährdung. Zudem steuert und/oder regelt die Steuer- und/oder Regeleinheit 12a zumindest eine Betriebsmoduseinstellung der Werkzeugmaschine in Abhängigkeit von kommunikationseinheitsübermittelten Daten.

Im Automatikbetriebsmodus der Werkzeugmaschine 32a werden die oben genannten Betriebsmodi automatisch von der Steuer- und/oder Regeleinheit 12a ausgewählt, insbesondere in Abhängigkeit von erfassten Kenngrößen, die mittels den oben genannten Sensoreinheiten ermittelbar sind. Es erfolgt im Automatikbetriebsmodus eine zumindest im Wesentlichen automatische Steuerung und/oder Regelung der Antriebseinheit 16a durch die Steuer- und/oder Regeleinheit 12a in Abhängigkeit von der Bearbeitungswerkzeugsensoreinheit 18a, von der Bedienersensoreinheit 20a, von der Werkstücksensoreinheit 22a und von der Werkzeugmaschinenzubehörsensoreinheit 24a.

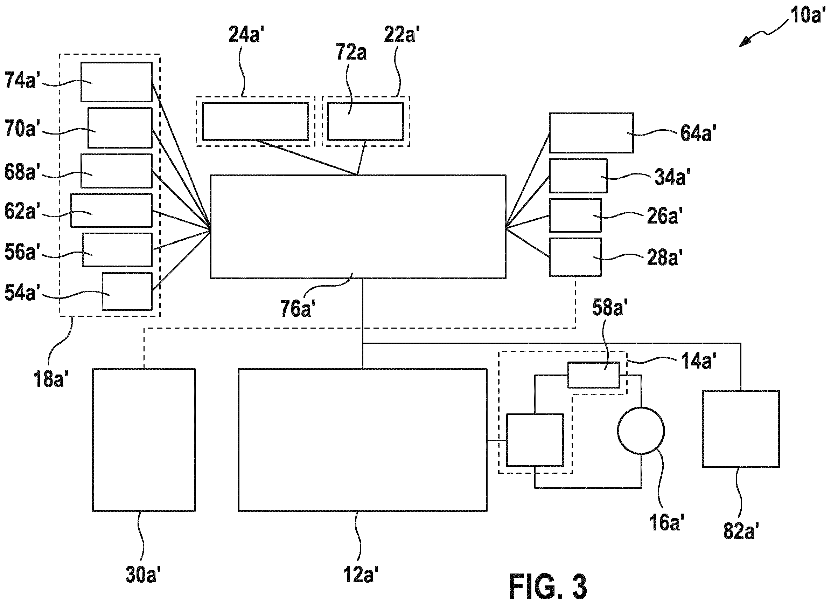

In Figur 3 ist eine alternative Werkzeugmaschinenvorrichtung 10a' dargestellt. Die alternative Werkzeugmaschinenvorrichtung 10a' weist eine zumindest im Wesentlichen analoge Ausgestaltung im Vergleich zu der in der Figur 2 schematisch dargestellten Werkzeugmaschinenvorrichtung 10a auf. Im Unterschied zu der in der Figur 2 schematisch dargestellten Werkzeugmaschinenvorrichtung 10a weist die in Figur 3 schematisch dargestellte alternative Werkzeugmaschinenvorrichtung 10a' zumindest eine Vorverarbeitungseinheit 76a' auf. Die Vorverarbeitungseinheit 76a' ist dazu vorgesehen, eine Kommunikation von mehreren Sensorelementen und/oder Sensoreinheiten der alternativen Werkzeugmaschinenvorrichtung 10a' untereinander und/oder mit einer Steuer- und/oder Regeleinheit 12a' der alternativen Werkzeugmaschinenvorrichtung 10a' zu organisieren. Hierbei ist die Vorverarbeitungseinheit 76a' dazu vorgesehen, einzelne Sensorsignale zu bündeln und Vorentscheidungen zu treffen. Eine Kommunikation zwischen der Vorverarbeitungseinheit 76a' und der Steuer- und/oder Regeleinheit 12a' kann hierbei kabellos und/oder kabelgebunden erfolgen.

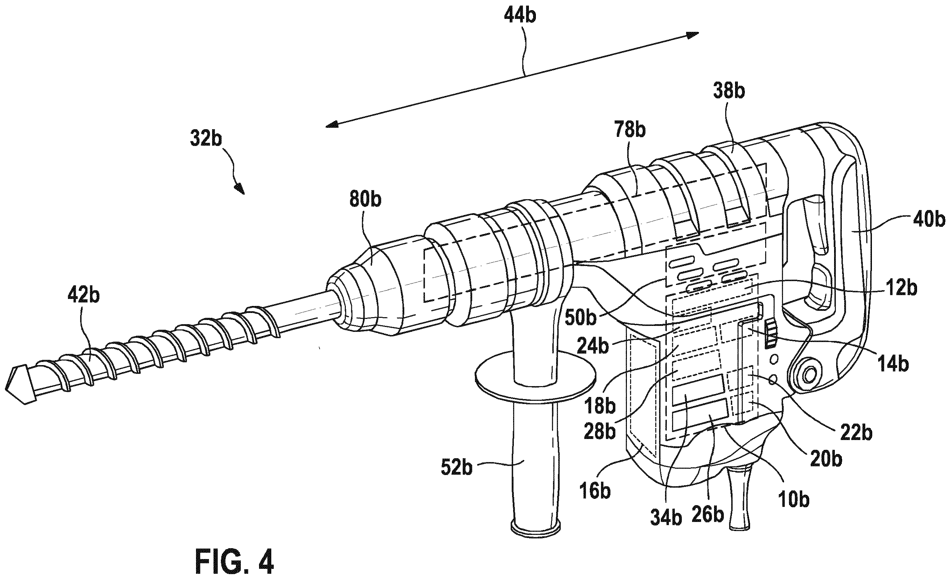

Figuren 4 bis 6 zeigen weitere Ausführungsbeispiele der Erfindung. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 6 ist der Buchstabe a durch den Buchstaben b oder c ersetzt.

Figur 4 zeigt eine Werkzeugmaschine 32b mit zumindest einer Werkzeugmaschinenvorrichtung 10b. Die Werkzeugmaschine 32b ist als tragbare Werkzeugmaschine ausgebildet. Hierbei ist die Werkzeugmaschine 32b als Bohr- und/oder Meißelhammer ausgebildet. Die Werkzeugmaschine 32b umfasst zumindest eine Schlagwerkvorrichtung 78b. Ferner umfasst die Werkzeugmaschine 32b ein Werkzeugmaschinengehäuse 38b, an dem in einem Frontbereich eine Werkzeugaufnahme 80b der Werkzeugmaschine 32b zu einer Aufnahme eines Bearbeitungswerkzeugs 42b angeordnet ist. An einer dem Frontbereich abgewandten Seite umfasst die Werkzeugmaschine 32b einen Haupthandgriff 40b zu einer Führung der Werkzeugmaschine 32b und zu einer Übertragung einer Kraft, insbesondere einer Andrückkraft, von einem Bediener auf die Werkzeugmaschine 32b. Die Werkzeugmaschine 32b ist ferner mit einer lösbaren Zusatzhandgriffeinheit ausgeführt. Hierbei kann die Zusatzhandgriffeinheit über eine Rastverbindung oder andere, einem Fachmann als sinnvoll erscheinende Verbindungen lösbar am Werkzeugmaschinengehäuse 38b befestigt sein.

Zu einer Erzeugung eines Antriebsmoments und zu einer Erzeugung eines Schlagimpulses mittels der Schlagwerkvorrichtung 78b weist die Werkzeugmaschine 32b eine Antriebseinheit 16b auf. Über eine Abtriebseinheit 50b der Werkzeugmaschine 32b wird ein Antriebsmoment der Antriebseinheit 16b zur Erzeugung eines Schlagimpulses an die Schlagwerkvorrichtung 78b übertragen. Es ist jedoch auch denkbar, dass die Werkzeugmaschine 32b entkoppelt von der Abtriebseinheit 50b ausgebildet ist und die Antriebseinheit 16b zu einer Erzeugung eines Schlagimpulses im Wesentlichen direkt auf die Schlagwerkvorrichtung 78b einwirkt. Ein Schlagimpuls der Schlagwerkvorrichtung 78b wird auf eine, einem Fachmann bekannte Art und Weise erzeugt. Ein rotierender Antrieb der Werkzeugaufnahme 80b und somit des Bearbeitungswerkzeugs 42b wird ebenfalls auf eine, einem Fachmann bereits bekannte Art und Weise erzeugt. In einer alternativen Ausgestaltung der Werkzeugmaschine 32b ist eine Schlagfrequenz entkoppelt von einer Drehzahl des Bearbeitungswerkzeugs 42b. Hierzu umfasst die Werkzeugmaschine 32b zumindest eine Schlagwerkvorrichtungsantriebseinheit zu einer Erzeugung eines Schlagimpuls mittels der Schlagwerkvorrichtung 78b und die Antriebseinheit 16b zu einer Erzeugung einer Rotationsbewegung des Bearbeitungswerkzeugs 42b. Die Schlagwerkvorrichtungsantriebseinheit und die Antriebseinheit 16b sind hierbei unabhängig voneinander ansteuerbar. Bevorzugt ist die Schlagwerkvorrichtungsantriebseinheit als elektrischer Linearmotor ausgebildet. Somit kann vorteilhaft ein hoher Wirkungsgrad erreicht werden. Es kann vorteilhaft eine Schlagenergie in Abhängigkeit von einem Material eines zu bearbeitenden Werkstücks angepasst werden, wie beispielsweise eine kleine Schalgenergie und eine hohe Schlagfrequenz bei weichen Materialien oder eine hohe Schlagenergie mit geringer Schlagfrequenz bei harten Materialien.

Die Werkzeugmaschinenvorrichtung 10b umfasst analog zu der in der Beschreibung der Figuren 1 bis 3 beschriebenen Werkzeugmaschinenvorrichtung 10a zumindest eine Bearbeitungswerkzeugsensoreinheit 18b, zumindest eine Bedienersensoreinheit 20b, zumindest eine Werkstücksensoreinheit 22b, zumindest eine Werkzeugmaschinenzubehörsensoreinheit 24b, zumindest eine Eingabeeinheit 26b, zumindest eine Kommunikationseinheit 28b und zumindest eine Informationsausgabeeinheit 34b. Vorzugsweise ist mittels der Informationsausgabeeinheit 34b eine Schlagenergie an einen Bediener ausgebbar. Zu einer Erfassung einer Schlagenergie umfasst die Bearbeitungswerkzeugsensoreinheit 18b beispielsweise zumindest ein Kraftsensorelement, zumindest ein Zeitmesssensorelement und/oder zumindest ein Geschwindigkeitssensorelement zu einer Erfassung einer Geschwindigkeit eines als Döpper ausgebildeten Schlagelements der Schlagwerkvorrichtung 78b. Alternativ ist es auch denkbar, dass eine Schlagenergie über eine Erfassung einer Antriebseinheitsdrehzahl der Antriebseinheit 16b und über einen Abgleich dieser mit einer in einer Speichereinheit einer Steuer- und/oder Regeleinheit 12b der Werkzeugmaschinenvorrichtung 10b abgelegten Kennlinie berechenbar ist. Eine maximale Schlagenergie ist hierbei mittels der Eingabeeinheit 26b einstellbar. Somit kann vorteilhaft bei empfindlichen Materialien (z.B. Fließen) die Schlagenergie begrenzt werden, um Beschädigungen an einem zu bearbeitenden Werkstück zu vermeiden.

Mittels der Eingabeeinheit 26b ist ein Betriebsmodus der Werkzeugmaschine 32b einstellbar. Hierbei weist die Werkzeugmaschine 32b zumindest einen Anlernstartbetriebsmodus, einen Lernbetriebsmodus, einen Referenzbetriebsmodus, einen Synchronisationsbetriebsmodus und/oder einen Automatikbetriebsmodus auf. Im Anlernbetriebsmodus ist eine Bearbeitungswerkzeugkenngröße mittels der Bearbeitungswerkzeugsensoreinheit 18b erfassbar. Hierbei ist über ein als Wegsensor und/oder Abstandssensor ausgebildetes Bearbeitungswerkzeugsensorelement 68b ein Bearbeitungswerkzeugdurchmesser des in der Werkzeugaufnahme 80b angeordneten Bearbeitungswerkzeugs 42b ermittelbar. Zudem ist im Anlernbetriebsmodus über eine Schwingungsanalyse eine Länge und eine Masse des Bearbeitungswerkzeugs 42b ermittelbar. Hierbei ist infolge eines Aktivierens der Schlagwerkvorrichtung 78b oder eines zusätzlichen Aktuators der Bearbeitungswerkzeugsensoreinheit 18b eine Schwingung des Bearbeitungswerkzeugs 42b erzeugbar. Die Schwingung des Bearbeitungswerkzeugs 42b ist mittels eines weiteren Bearbeitungswerkzeugsensorelements 68b, das als Beschleunigungssensor ausgebildet ist, erfassbar. In einem in einer Speichereinheit der Steuer- und/oder Regeleinheit 12b hinterlegten Kennfeld sind Schwingungsdaten in Abhängigkeit von einer Länge gespeichert. Zudem ist es denkbar, dass eine Erfassung von weiteren Bearbeitungswerkzeugkenngrößen zusätzlich über RFID, NFC, Scannen eines Barcodes, DataMatrix-Codes o.ä. erfolgt. Mittels einer Erfassung von Schwingungen durch das weitere Bearbeitungswerkzeugsensorelement 68b sind zudem Resonanzen oder untypische Schwingungen erkennbar. Hierdurch ist ein Defekt oder ein inkorrekt montiertes Bearbeitungswerkzeug 42b erkennbar und mittels der Informationsausgabeeinheit 34b an einen Bediener ausgebbar. Auf Grundlage eines erkannten Bearbeitungswerkzeugs 42b sind beispielsweise eine Drehzahl, eine Schlagzahl, eine Schlagenergie, ein Überrastmoment mittels der Steuer- und/oder Regeleinheit 12b einstellbar.

Des Weiteren umfasst die Bearbeitungswerkzeugsensoreinheit 18b zumindest ein Entfernungsmesssensorelement (hier nicht näher dargestellt), wie beispielsweise ein Ultraschallentfernungsmesssensorelement, ein Laserentfernungsmesssensorelement o. dgl. auf. Mittels des Entfernungsmesssensorelements ist über die Steuer- und/oder Regeleinheit 12b der Werkzeugmaschinenvorrichtung 10b eine automatische Abschaltung der Antriebseinheit 16b bei einem Erreichen einer vorgegebenen Bohrtiefe realisierbar. Hierbei ist es denkbar, dass ein Anbohren beispielsweise in Abhängigkeit von einem Drehmoment und/oder einem Anpressdruck automatisch erkennbar ist.

Im Lernbetriebsmodus ist mittels der Bedienersensoreinheit 20b eine Vorschubkraft eines Bedieners erfassbar. Hierdurch ist in Abhängigkeit von einem Arbeitsfortschritt ein Verschleiß des Bearbeitungswerkzeugs 42b ermittelbar. Dieser Verschleiß ist mittels der Informationsausgabeeinheit 34b an einen Bediener ausgebbar, so dass ein Bediener auf einen Werkzeugwechsel aufmerksam machbar ist. Zudem ist im Lernbetriebsmodus mittels der Bedienersensoreinheit 20b ein Anpressdruck eines Bedieners messbar und mittels der Werkstücksensoreinheit 22b ist ein Arbeitsfortschritt am Werkstück messbar, um mittels der Steuer- und/oder Regeleinheit 12b eine Schlagfrequenz der Schlagwerkvorrichtung 78b einzustellen.

Ferner umfasst die Werkzeugmaschinenvorrichtung 10b zumindest eine Umgebungssensoreinheit (hier nicht näher dargestellt), die zumindest ein Lagesensorelement zu einer Erfassung einer Neigung der Werkzeugmaschine 32b relativ zu einer Horizontalen umfasst. Ferner umfasst die Werkzeugmaschinenvorrichtung 10b zumindest eine Lageregelungseinheit, wie beispielsweise eine Gyroskopeinheit, die beispielsweise in Abhängigkeit von zumindest einer mittels des Lagesensorelements erfassten Kenngröße eine Ausrichtung der Werkzeugmaschine 32b relativ zu einer Horizontalen regelt. Somit können vorteilhaft bei einer ungewollten Lageabweichung zusätzliche stabilisierende Kräfte auf die Werkzeugmaschine 32b wirken. Es kann vorteilhaft eine Einhaltung eines voreingestellten Bohrwinkels erreicht werden, bevorzugt waagerecht oder senkrecht. Hinsichtlich weiterer Merkmale der Werkzeugmaschinenvorrichtung 10b darf auf die in der Beschreibung der Figuren 1 bis 3 beschriebene Werkzeugmaschinenvorrichtung 10a verwiesen werden.

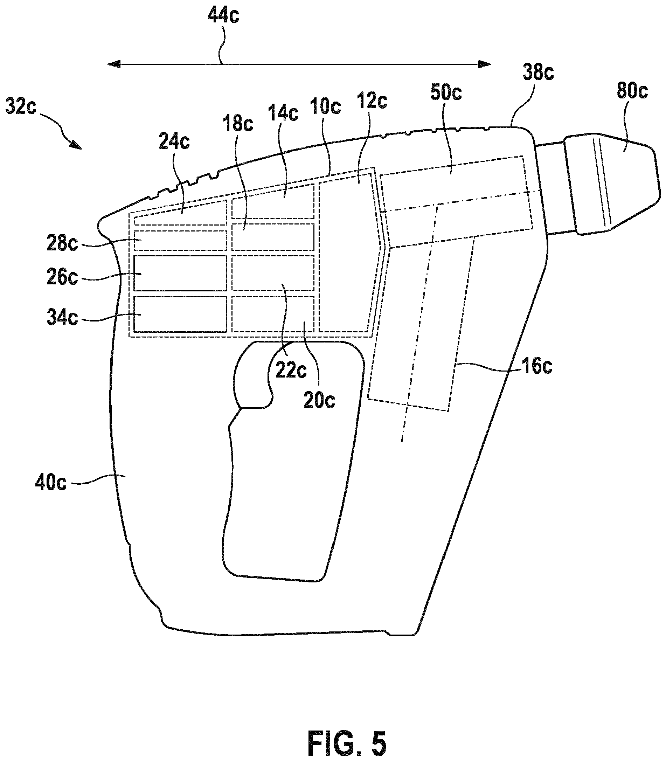

Figur 5 zeigt eine Werkzeugmaschine 32c mit zumindest einer Werkzeugmaschinenvorrichtung 10c. Die Werkzeugmaschine 32c ist als tragbare Werkzeugmaschine ausgebildet. Hierbei ist die Werkzeugmaschine 32c als Akkuschrauber ausgebildet. Die Werkzeugmaschine 32c umfasst zumindest ein Werkzeugmaschinengehäuse 38c, an dem in einem Frontbereich eine Werkzeugaufnahme 80c der Werkzeugmaschine 32c zu einer Aufnahme eines Bearbeitungswerkzeugs (hier nicht näher dargestellt) angeordnet ist. An einer dem Frontbereich abgewandten Seite umfasst die Werkzeugmaschine 32c einen Haupthandgriff 40c zu einer Führung der Werkzeugmaschine 32c und zu einer Übertragung einer Kraft, insbesondere einer Andrückkraft, von einem Bediener auf die Werkzeugmaschine 32c. Zu einer Erzeugung eines Antriebsmoments weist die Werkzeugmaschine 32c eine Antriebseinheit 16c auf. Über eine Abtriebseinheit 50c der Werkzeugmaschine 32c wird ein Antriebsmoment der Antriebseinheit 16c zur Erzeugung einer Rotationsbewegung an die Werkzeugaufnahme 80c übertragen. Es ist jedoch auch denkbar, dass die Werkzeugmaschine 32c entkoppelt von der Abtriebseinheit 50c ausgebildet ist und die Antriebseinheit 16c zu einer Erzeugung einer Rotationsbewegung im Wesentlichen direkt auf die Werkzeugaufnahme 80c einwirkt. Ein rotierender Antrieb der Werkzeugaufnahme 80c und des Bearbeitungswerkzeugs wird somit auf eine, einem Fachmann bereits bekannte Art und Weise erzeugt.

Die Werkzeugmaschinenvorrichtung 10c umfasst analog zu der in der Beschreibung der Figuren 1 bis 3 beschriebenen Werkzeugmaschinenvorrichtung 10a zumindest eine Bearbeitungswerkzeugsensoreinheit 18c, zumindest eine Bedienersensoreinheit 20c, zumindest eine Werkstücksensoreinheit 22c, zumindest eine Werkzeugmaschinenzubehörsensoreinheit 24c, zumindest eine Eingabeeinheit 26c, zumindest eine Kommunikationseinheit 28c und zumindest eine Informationsausgabeeinheit 34c. Mittels der Informationsausgabeeinheit 34c ist eine Anzahl an Umdrehungen eines in einer Werkzeugaufnahme 80c der Werkzeugmaschine 32c angeordneten Bearbeitungswerkzeugs (hier nicht näher dargestellt) relativ zum Werkzeugmaschinengehäuse 38c ausgebbar. Zu einer Erfassung einer Anzahl an Umdrehungen des Bearbeitungswerkzeugs umfasst die Bearbeitungswerkzeugsensoreinheit 18c zumindest ein Drehzahlsensorelement (hier nicht näher dargestellt). Das Drehzahlsensorelement kann hierbei als optisches Sensorelement oder als mechanisches Sensorelement ausgebildet sein. Infolge einer Definition von Schwellenwerten kann vorteilhaft definiert werden, wann ein Schraubvorgang beginnt und somit eine Umdrehungszählung beginnt, um Leerläufe nicht mitzuzählen. Mittels einer Eingabe einer Schraubenart (z.B. M10) über die Eingabeeinheit 26c kann zudem eine Einschraubtiefe berechnet werden und mittels der Informationsausgabeeinheit 34c ausgegeben werden. Zudem umfasst die Bearbeitungswerkzeugsensoreinheit 18c zumindest ein Drehmomentsensorelement (hier nicht näher dargestellt) zu einer Erfassung eines auf beispielsweise eine Schraube wirkendes Drehmoment des Bearbeitungswerkzeugs. Somit ist bei einem Erreichen oder eines Überschreitens eines zuvor mittels der Eingabeeinheit 26c eingestellten maximalen Drehmoments die Antriebseinheit 16c automatisch abschaltbar. Es kann hierdurch beispielsweise einem Setzungsverhalten bei einer Schraubverbindung entgegengewirkt werden, indem bei einem Erreichen des eingestellten maximalen Drehmoments das Bearbeitungswerkzeug und somit eine Schraube um beispielsweise weitere 90° gedreht werden. Ein Drehmoment ist hierbei mittels des Drehmomentsensorelements erfassbar oder ein Drehmoment ist in Abhängigkeit von Antriebseinheitsströmen, Antriebseinheitsspannungen, Antriebseinheitstemperaturen o. dgl. mittels einer Steuer- und/oder Regeleinheit 12c der Werkzeugmaschinenvorrichtung 10c errechenbar und mittels der Informationsausgabeeinheit 34c ausgebbar.

Mittels der Eingabeeinheit 26c ist ein Betriebsmodus der Werkzeugmaschine 32c einstellbar. Hierbei weist die Werkzeugmaschine 32c zumindest einen Anlernstartbetriebsmodus, einen Lernbetriebsmodus, einen Referenzbetriebsmodus, einen Synchronisationsbetriebsmodus und/oder einen Automatikbetriebsmodus auf. Im Anlernbetriebsmodus ist eine Bearbeitungswerkzeugkenngröße mittels der Bearbeitungswerkzeugsensoreinheit 18c erfassbar. Hierbei ist über ein als Wegsensor und/oder Abstandssensor ausgebildetes Bearbeitungswerkzeugsensorelement 68c ein Bearbeitungswerkzeugdurchmesser des in der Werkzeugaufnahme 80c angeordneten Bearbeitungswerkzeugs ermittelbar. Zudem ist im Anlernbetriebsmodus über eine Schwingungsanalyse eine Länge und eine Masse des Bearbeitungswerkzeugs ermittelbar. Die Schwingung des Bearbeitungswerkzeugs ist mittels eines weiteren Bearbeitungswerkzeugsensorelements 68c, das als Beschleunigungssensor ausgebildet ist, erfassbar. In einem in einer Speichereinheit der Steuer- und/oder Regeleinheit 12c hinterlegten Kennfeld sind Schwingungsdaten in Abhängigkeit von einer Länge gespeichert. Zudem ist es denkbar, dass eine Erfassung von weiteren Bearbeitungswerkzeugkenngrößen zusätzlich über RFID, NFC, Scannen eines Barcodes, DataMatrix-Codes o.ä. erfolgt. Mittels einer Erfassung von Schwingungen durch das weitere Bearbeitungswerkzeugsensorelement 68c sind zudem Resonanzen oder untypische Schwingungen erkennbar. Hierdurch ist ein Defekt oder ein inkorrekt montiertes Bearbeitungswerkzeug erkennbar und mittels der Informationsausgabeeinheit 34c an einen Bediener ausgebbar. Auf Grundlage eines erkannten Bearbeitungswerkzeugs 42c sind beispielsweise eine Drehzahl und/oder ein Überrastmoment mittels der Steuer- und/oder Regeleinheit 12c einstellbar. Ferner ist mittels des weiteren Bearbeitungswerkzeugsensorelements 68c beispielsweise eine Unterbrechung eines Formschlusses zwischen einer Schraube und dem in der Werkzeugaufnahme 80c angeordneten Bearbeitungswerkzeug erkennbar, indem Schwingungen, die durch ein Herausrutschen des Bearbeitungswerkzeugs aus der Schraube erzeugt werden, erfassbar sind. Die Steuer- und/oder Regeleinheit 12c reduziert bei einem Erkennen einer Unterbrechung eines Formschlusses zwischen einer Schraube und dem in der Werkzeugaufnahme 80c angeordneten Bearbeitungswerkzeug die Antriebseinheitsdrehzahl, um beispielsweise ein einfaches Wiedereinführen des Bearbeitungswerkzeugs in die Schraube zu ermöglichen. Nach einem Einführen des Bearbeitungswerkzeugs in die Schraube ist die Antriebseinheitsdrehzahl automatisch oder manuell wieder erhöhbar.

Im Lernbetriebsmodus ist mittels der Bedienersensoreinheit 20c eine Vorschubkraft eines Bedieners erfassbar. Hierdurch ist in Abhängigkeit von einem Arbeitsfortschritt ein Verschleiß des Bearbeitungswerkzeugs ermittelbar. Dieser Verschleiß ist mittels der Informationsausgabeeinheit 34c an einen Bediener ausgebbar, so dass ein Bediener auf einen Werkzeugwechsel aufmerksam machbar ist. Zudem ist im Lernbetriebsmodus mittels der Bedienersensoreinheit 20c ein Anpressdruck eines Bedieners messbar und mittels der Werkstücksensoreinheit 22c ist ein Arbeitsfortschritt am Werkstück messbar, um mittels der Steuer- und/oder Regeleinheit 12c eine Drehzahl, ein Drehmoment und/oder ein Drehimpuls der Antriebseinheit 16c einzustellen.

Des Weiteren ist im Lernbetriebsmodus mittels der Bearbeitungswerkzeugsensoreinheit 18c ein Anpressdruck des Bearbeitungswerkzeugs an ein Werkstück erfassbar, wobei bei einem geringen Anpressdruck eine Drehzahl langsam erhöhbar ist oder eine Ansetzfunktion aktivierbar ist. Die Ansetzfunktion kann vorteilhaft infolge eines langsamen Hochfahrens einer Drehzahl ein Wegrutschen des Bearbeitungswerkzeugs bei einem Ansetzen an einem Werkstück, wie beispielsweise bei glatten, harten Oberflächen, vorteilhaft vermeiden. Zudem ist im Lernbetriebsmodus mittels der Bearbeitungswerkzeugsensoreinheit 18c ein Durchrutschen eines als Schraubenbit ausgebildeten Bearbeitungswerkzeugs durch einen schwankenden Verlauf eines Drehzahlanstiegs und/oder eines Drehmoments erfassbar. Hierbei ist mittels der Steuer- und/oder Regeleinheit 12c eine Drehzahl der Antriebseinheit 16c langsam erhöhbar. Zudem ist eine Informationsausgabe oder ein Abschalten infolge eines erkannten Durchrutschens ebenfalls denkbar.

Im Synchronisationsbetriebsmodus ist mittels der Kommunikationseinheit 28c eine Verbindung zwischen der Steuer- und/oder Regeleinheit 12c und einem Ladegerät (hier nicht näher dargestellt) herstellbar. Hierbei ist mittels der Steuer- und/oder Regeleinheit 12c auswertbar, wann ein an der Werkzeugmaschine 32c angeordneter Akku entladen ist und wann ein im Ladegerät angeordneter Akku vollständig geladen ist. Somit kann extrapoliert werden wann der in Verwendung befindliche Akku entladen ist und der zweite Akku nach Bedarf schonend oder schnell geladen werden muss.

Im Automatikbetriebsmodus ist beispielsweise eine Antriebseinheitsdrehzahl und/oder ein Antriebseinheitsdrehmoment bei einem Schraubvorgang variierbar, um beispielsweise eine Schlagfunktion zu realisieren und/oder um Schrauben zu lösen. Hierbei ist es denkbar, dass die Werkzeugmaschine 32c zumindest ein Kupplungselement (hier nicht näher dargestellt) umfasst, wobei die Antriebseinheit 16c infolge eines Kupplungsspiels (Getriebespiels) Anlauf nehmen kann und somit durch eine kinetische Energie einen Drehimpuls am Bearbeitungswerkzeug erzeugbar ist. Hinsichtlich weiterer Merkmale der Werkzeugmaschinenvorrichtung 10c darf auf die in der Beschreibung der Figuren 1 bis 3 beschriebenen Werkzeugmaschinenvorrichtung 10a verwiesen werden.

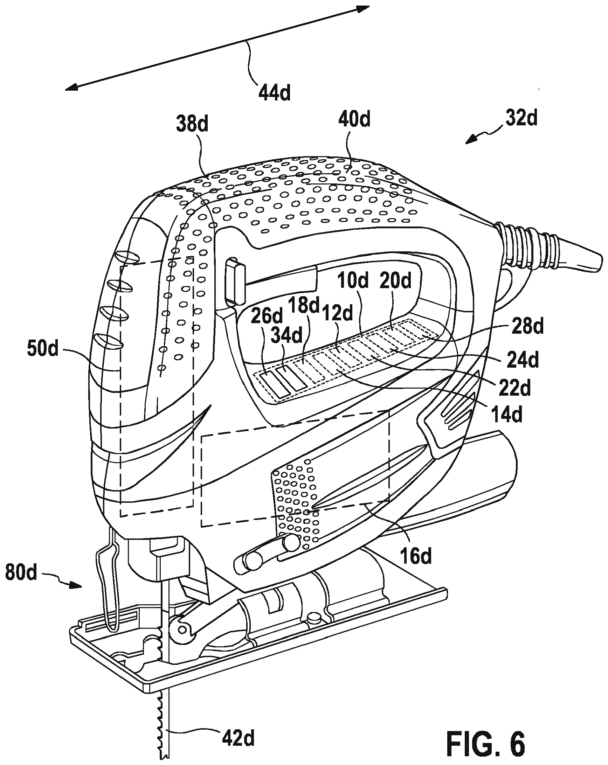

Figur 6 zeigt eine Werkzeugmaschine 32d mit zumindest einer Werkzeugmaschinenvorrichtung 10d. Die Werkzeugmaschine 32d ist als tragbare Werkzeugmaschine ausgebildet. Hierbei ist die Werkzeugmaschine 32d als Stichsäge ausgebildet. Die Werkzeugmaschine 32d weist ein Werkzeugmaschinengehäuse 38d auf, das eine Antriebseinheit 16d der Werkzeugmaschine 32d und eine Abtriebseinheit 50d der Werkzeugmaschine 32d umschließt. Die Antriebseinheit 16d und die Abtriebseinheit 50d sind dazu vorgesehen, ein in einer Werkzeugaufnahme 80d der Werkzeugmaschine 32d eingespanntes Bearbeitungswerkzeug 42d oszillierend anzutreiben. Hierbei wird das Bearbeitungswerkzeug 42d im Wesentlichen senkrecht zu einer Bearbeitungsrichtung oszillierend angetrieben. Das Bearbeitungswerkzeug 42d ist als Stichsägeblatt ausgebildet. Es ist jedoch auch denkbar, dass das Bearbeitungswerkzeug 42d von einem anderen, einem Fachmann als sinnvoll erscheinenden Bearbeitungswerkzeug gebildet wird. Ein oszillierender Antrieb des Bearbeitungswerkzeugs 42d erfolgt hierbei auf eine, einem Fachmann bereits bekannte Art und Weise.

Die Werkzeugmaschinenvorrichtung 10d umfasst analog zu der in der Beschreibung der Figuren 1 bis 3 beschriebenen Werkzeugmaschinenvorrichtung 10a zumindest eine Bearbeitungswerkzeugsensoreinheit 18d, zumindest eine Bedienersensoreinheit 20d, zumindest eine Werkstücksensoreinheit 22d, zumindest eine Werkzeugmaschinenzubehörsensoreinheit 24d, zumindest eine Eingabeeinheit 26d, zumindest eine Kommunikationseinheit 28d und zumindest eine Informationsausgabeeinheit 34d.

Mittels der Eingabeeinheit 26d ist ein Betriebsmodus der Werkzeugmaschine 32c einstellbar. Hierbei weist die Werkzeugmaschine 32d zumindest einen Anlernstartbetriebsmodus, einen Lernbetriebsmodus, einen Referenzbetriebsmodus, einen Synchronisationsbetriebsmodus und/oder einen Automatikbetriebsmodus auf. Im Anlernbetriebsmodus ist eine Bearbeitungswerkzeugkenngröße mittels der Bearbeitungswerkzeugsensoreinheit 18d erfassbar. Hierbei ist infolge eines Aktivierens der Antriebseinheit 16d oder eines zusätzlichen Aktuators der Bearbeitungswerkzeugsensoreinheit 18d eine Schwingung des Bearbeitungswerkzeugs 42d erzeugbar. Die Schwingung des Bearbeitungswerkzeugs 42d ist mittels eines Bearbeitungswerkzeugsensorelements 68d, das als Beschleunigungssensor ausgebildet ist, erfassbar. In einem in einer Speichereinheit einer Steuer- und/oder Regeleinheit 12d der Werkzeugmaschinenvorrichtung 10d hinterlegten Kennfeld sind Schwingungsdaten in Abhängigkeit von einer Länge gespeichert. Zudem ist es denkbar, dass eine Erfassung von weiteren Bearbeitungswerkzeugkenngrößen zusätzlich über RFID, NFC, Scannen eines Barcodes, DataMatrix-Codes o.ä. erfolgt. Mittels einer Erfassung von Schwingungen durch das Bearbeitungswerkzeugsensorelement 68d sind zudem Resonanzen oder untypische Schwingungen erkennbar. Hierdurch ist ein Defekt oder ein inkorrekt montiertes Bearbeitungswerkzeug 42d erkennbar und mittels der Informationsausgabeeinheit 34d an einen Bediener ausgebbar. Auf Grundlage eines erkannten Bearbeitungswerkzeugs 42d sind beispielsweise eine Hubfrequenz, eine Hubamplitude, ein Pendelhub, ein Überrastmoment mittels der Steuer- und/oder Regeleinheit 12b einstellbar.

Im Lernbetriebsmodus ist mittels der Bedienersensoreinheit 20d eine Vorschubkenngröße erfassbar. Hierzu weist die Bedienersensoreinheit 20d einen Beschleunigungssensor auf. Hierdurch ist mittels der Bedienersensoreinheit 20d erfassbar, ob die Werkzeugmaschine 32d mit viel oder mit wenig Vorschub betrieben wird und/oder ob ein Kurvenschnitt oder ein gerader Schnitt durchgeführt wird. Mittels der Steuer- und/oder Regeleinheit 12d ist somit in Abhängigkeit der mittels der Bedienersensoreinheit 20d erfassten Kenngröße ein Pendelhubparameter einstellbar. Hierbei ist beispielsweise bei einem schnellen, geraden Schnitt ein hoher Pendelhub einstellbar, bei einem Kurvenschnitt mit engen Radien ist der Pendelhub deaktivierbar usw. Zusätzlich ist der Pendelhub auch in Abhängigkeit vom erfassten Bearbeitungswerkzeug 42d und in Abhängigkeit von einem Werkstoff eines zu bearbeitenden Werkstücks einstellbar. Hierbei ist beispielsweise für ein grobes Stichsägeblatt für einen schnellen Arbeitsfortschritt ein großer Pendelhub einstellbar. Zusätzlich ist auch eine Hubfrequenz entsprechend den erfassten Kenngrößen mittels der Steuer- und/oder Regeleinheit 12d anpassbar.

Ferner ist im Lernbetriebsmodus mittels der Werkstücksensoreinheit 22d eine Härte und/oder eine Dichte eines Werkstoffs eines zu bearbeitenden Werkstücks ermittelbar. Ist die Dichte bekannt, ist über zumindest eine wirkende Betriebskraft auch eine Dicke des Werkstücks ermittelbar. Ferner ist mittels der Werkstücksensoreinheit 22d eine Temperatur des Bearbeitungswerkzeugs 42d ermittelbar. Hierbei ist mittels der Informationsausgabeeinheit 34d eine Überhitzungsgefahr an einen Bediener ausgebbar und/oder es ist mittels der Steuer- und/oder Regeleinheit 12d ein Kühlluftstrom auf das Bearbeitungswerkzeug 42d ausrichtbar. Hinsichtlich weiterer Merkmale der Werkzeugmaschinenvorrichtung 10d darf auf die in der Beschreibung der Figuren 1 bis 3 beschriebene Werkzeugmaschinenvorrichtung 10a verwiesen werden.

## Patentansprüche

1. Werkzeugmaschinenvorrichtung, insbesondere Handwerkzeugmaschinenvorrichtung, mit zumindest einer Steuer- und/oder Regeleinheit (12a; 12a'; 12b; 12c; 12d) und mit zumindest einer Antriebseinheitssensoreinheit (14a; 14a'; 14b; 14c; 14d) zu einer Erfassung zumindest einer Antriebseinheitskenngröße, die zumindest zu einer Steuerung und/oder Regelung einer Antriebseinheit (16a; 16a'; 16b; 16c; 16d) einer Werkzeugmaschine und/oder zu einer Informationsausgabe an einen Bediener von der Steuer- und/oder Regeleinheit (12a; 12a'; 12b; 12c; 12d) verarbeitbar ist, und mit zumindest einer Bearbeitungswerkzeugsensoreinheit (18a; 18a'; 18b; 18c; 18d) zu einer Erfassung zumindest einer Bearbeitungswerkzeugkenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist, **gekennzeichnet durch** zumindest eine Bedienersensoreinheit (20a; 20a'; 20b; 20c; 20d) zu einer Erfassung zumindest einer bedienerspezifischen Kenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist und/oder durch zumindest eine Werkstücksensoreinheit (22a; 22a'; 22b; 22c; 22d) zu einer Erfassung zumindest einer Werkstückkenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist und/oder durch zumindest eine Werkzeugmaschinenzubehörsensoreinheit (24a; 24a'; 24b; 24c; 24d) zu einer Erfassung zumindest einer Werkzeugmaschinenzubehörkenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist.

2. Werkzeugmaschinenvorrichtung nach Anspruch 1, **dadurch gekennzeichnet, dass** die Steuer- und/oder Regeleinheit (12a; 12a'; 12b; 12c; 12d) in zumindest einem Betriebsmodus die zumindest eine mittels der Bearbeitungswerkzeugsensoreinheit (18a; 18a'; 18b; 18c; 18d) erfasste Bearbeitungswerkzeugkenngröße zu einer Bestimmung eines Werkzeugtyps eines an einer Werkzeugaufnahme (80a; 80b; 80c; 80d) der Werkzeugmaschine angeordneten Bearbeitungswerkzeugs (42a; 42b; 42d) verarbeitet.

3. Werkzeugmaschinenvorrichtung nach einem der vorhergehenden Ansprüche, **dadurch gekennzeichnet, dass** die Steuer- und/oder Regeleinheit (12a; 12a'; 12b; 12c; 12d) zumindest eine Speichereinheit umfasst, in der zumindest ein Einstellungsparameter zu einer Steuerung und/oder einer Regelung der Antriebseinheit (16a; 16a'; 16b; 16c; 16d) speicherbar ist, der zumindest von zumindest einer vorangegangenen Bearbeitung eines Werkstücks abhängig ist.

4. Werkzeugmaschinenvorrichtung nach einem der vorhergehenden Ansprüche, **gekennzeichnet durch** zumindest eine Eingabeeinheit (26a; 26a'; 26b; 26c; 26d) zu einer Eingabe zumindest einer Bearbeitungskenngröße, die zumindest zu einer Steuerung und/oder Regelung der Antriebseinheit (16a; 16a'; 16b; 16c; 16d) von der Steuer- und/oder Regeleinheit (12a; 12a'; 12b; 12c; 12d) verarbeitbar ist.

5. Werkzeugmaschinenvorrichtung nach einem der vorhergehenden Ansprüche, **gekennzeichnet durch** zumindest eine Kommunikationseinheit (28a; 28a'; 28b; 28c; 28d) zu einer Kommunikation mit zumindest einer externen Einheit (30a; 30a'; 30b; 30c; 30d) zu einem Austausch von elektronischen Daten zumindest zu einer Steuerung und/oder Regelung der Antriebseinheit (16a; 16a'; 16b; 16c; 16d).

6. Werkzeugmaschinenvorrichtung nach Anspruch 5, **dadurch gekennzeichnet, dass** die Steuer- und/oder Regeleinheit (12a; 12a'; 12b; 12c; 12d) dazu vorgesehen ist, mittels der Kommunikationseinheit (28a; 28a'; 28b; 28c; 28d) auf eine zentrale Datenbank zuzugreifen, in der zumindest eine Sicherheits- und/oder Betriebsbereichsregel hinterlegt sind/ist, die zumindest zu einer Steuer- und/oder Regelung der Antriebseinheit (16a; 16a'; 16b; 16c; 16d) von der Steuer- und/oder Regeleinheit (12a; 12a'; 12b; 12c; 12d) verarbeitbar sind/ist.

7. Werkzeugmaschinenvorrichtung zumindest nach Anspruch 5, **dadurch gekennzeichnet, dass** die Steuer- und/oder Regeleinheit (12a; 12a'; 12b; 12c; 12d) zumindest einen in einer Speichereinheit der Steuer- und/oder Regeleinheit (12a; 12a'; 12b; 12c; 12d) abgespeicherten Parameter zu einer Steuerung und/oder Regelung der Antriebseinheit (16a; 16a'; 16b; 16c; 16d) in Abhängigkeit von mittels der Kommunikationseinheit (28a; 28a'; 28b; 28c; 28d) übertragenen elektronischen Daten adaptiert.

8. Werkzeugmaschine, insbesondere tragbare Werkzeugmaschine, mit zumindest einer Werkzeugmaschinenvorrichtung nach einem der vorhergehenden Ansprüche.

9. Werkzeugmaschinensystem mit zumindest einer Werkzeugmaschine nach Anspruch 8 und mit zumindest einer externen Einheit (30a), insbesondere einer externen Sensoreinheit.

10. Verfahren zu einer Steuerung und/oder Regelung zumindest einer Werkzeugmaschine nach Anspruch 8, wobei die Steuer- und/oder Regeleinheit (12a; 12a'; 12b; 12c; 12d) zumindest einen Bearbeitungswerkzeugzustand ermittelt und den Bearbeitungswerkzeugzustand mittels einer Informationsausgabeeinheit (34a; 34a'; 34b; 34c; 34d) ausgibt und/oder zu einer Steuerung und/oder Regelung der Antriebseinheit (16a; 16a'; 16b; 16c; 16d) der Werkzeugmaschine berücksichtigt, wobei die Steuer- und/oder Regeleinheit (12a; 12a'; 12b; 12c; 12d) zumindest zu einer Steuer- und/oder Regelung der Antriebseinheit (16a; 16a'; 16b; 16c; 16d) werkzeugmaschinensensorerfasste Daten und/oder kommunikationsübermittelte Daten nutzt, wobei die Steuer- und/oder Regeleinheit (12a; 12a'; 12b; 12c; 12d) in Abhängigkeit von werkzeugmaschinensensorerfassten Daten und/oder von kommunikationsübermittelten Daten zumindest eine Information mittels der Informationsausgabeeinheit (34a; 34a'; 34b; 34c; 34d) ausgibt, **dadurch gekennzeichnet, dass** mittels einer Bedienersensoreinheit (20a; 20a'; 20b; 20c; 20d) zumindest eine bedienerspezifische Kenngröße erfasst wird, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitet wird und/oder dass mittels einer Werkstücksensoreinheit (22a; 22a'; 22b; 22c; 22d) zumindest eine Werkstückkenngröße erfasst wird, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitet wird und/oder dass mittels einer Werkzeugmaschinenzubehörsensoreinheit (24a; 24a'; 24b; 24c; 24d) zumindest eine Werkzeugmaschinenzubehörkenngröße erfasst wird, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitet wird.

11. Verfahren nach Anspruch 10, **dadurch gekennzeichnet, dass** eine Berücksichtigung zumindest der Antriebseinheitskenngröße und/oder der Bearbeitungswerkzeugkenngröße zu einer Steuerung und/oder Regelung der Antriebseinheit (16a; 16a'; 16b; 16c; 16d) der Werkzeugmaschine in zumindest einem Betriebsmodus der Werkzeugmaschine stetig über eine zumindest im Wesentlichen gesamte Einsatzdauer erfolgt.

12. Verfahren nach Anspruch 10 oder 11 **dadurch gekennzeichnet, dass** die Steuer- und/oder Regeleinheit (12a; 12a'; 12b; 12c; 12d) in zumindest einem Betriebsmodus zumindest teilweise automatisch mittels einer Kommunikationseinheit (28a; 28a'; 28b; 28c; 28d) auf eine zentrale Datenbank zugreift, in der zumindest eine Sicherheits- und/oder Betriebsbereichsregel hinterlegt sind/ist, die zumindest zu einer Steuer- und/oder Regelung der Antriebseinheit (16a; 16a'; 16b; 16c; 16d) von der Steuer- und/oder Regeleinheit (12a; 12a'; 12b; 12c; 12d) verarbeitbar sind/ist.

13. Verfahren nach einem der Ansprüche 10 bis 12 **dadurch gekennzeichnet, dass** die Steuer- und/oder Regeleinheit (12a; 12a'; 12b; 12c; 12d) zumindest eine Betriebsmoduseinstellung der Werkzeugmaschine in Abhängigkeit von werkzeugmaschinensensorerfassten Daten und/oder von kommunikationseinheitsübermittelten Daten steuert und/oder regelt.

## Claims

1. Power tool device, in particular a handheld power tool device, with at least one open-loop and/or closed-loop control unit (12a; 12a'; 12b; 12c; 12d) and with at least one drive unit sensor unit (14a; 14a'; 14b; 14c; 14d) for recording at least one drive unit characteristic variable, which can be processed by the open-loop and/or closed-loop control unit (12a; 12a'; 12b; 12c; 12d) at least for providing an open-loop and/or closed-loop control of a drive unit (16a; 16a'; 16b; 16c; 16d) of a power tool and/or for providing an output of information to an operator, and with at least one machining tool sensor unit (18a; 18a'; 18b; 18c; 18d) for recording at least one machining tool characteristic variable, which can be processed by the open-loop and/or closed-loop control unit (12a; 12a'; 12b; 12c; 12d) at least for providing an open-loop and/or closed-loop control of a drive unit (16a; 16a'; 16b; 16c; 16d) and/or for providing an output of information to an operator, **characterized by** at least one operator sensor unit (20a; 20a'; 20b; 20c; 20d) for recording at least one operator-specific characteristic variable, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for outputting information to an operator and/or by at least one workpiece sensor unit (22a; 22a'; 22b; 22c; 22d) for recording at least one workpiece characteristic variable, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for outputting information to an operator and/or by at least one power tool accessory sensor unit (24a; 24a'; 24b; 24c; 24d) for recording at least one power tool accessory characteristic variable, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for outputting information to an operator.

2. Power tool device according to Claim 1, **characterized in that** in at least one operating mode the open-loop and/or closed-loop control unit (12a; 12a'; 12b; 12c; 12d) processes the at least one machining tool characteristic variable recorded by means of the machining tool sensor unit (18a; 18a'; 18b; 18c; 18d) for providing a determination of a tool type of a machining tool (42a; 42b; 42d) arranged on a tool holder (80a; 80b; 80c; 80d) of the power tool.

3. Power tool device according to one of the preceding claims, **characterized in that** the open-loop and/or closed-loop control unit (12a; 12a'; 12b; 12c; 12d) comprises at least one memory unit, in which at least one setting parameter that is dependent at least on at least one previous machining of a workpiece can be stored for providing an open-loop and/or closed-loop control of the drive unit (16a; 16a'; 16b; 16c; 16d).

4. Power tool device according to one of the preceding claims, **characterized by** at least one input unit (26a; 26a'; 26b; 26c; 26d) for inputting at least one machining characteristic variable, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) .

5. Power tool device according to one of the preceding claims, **characterized by** at least one communication unit (28a; 28a'; 28b; 28c; 28d) for communication with at least one external unit (30a; 30a'; 30b; 30c; 30d) for an exchange of electronic data at least for providing an open-loop and/or closed-loop control of the drive unit (16a; 16a'; 16b; 16c; 16d) .

6. Power tool device according to Claim 5, **characterized in that** the open-loop and/or closed-loop control unit (12a; 12a'; 12b; 12c; 12d) is intended for accessing by means of the communication unit (28a; 28a'; 28b; 28c; 28d) a central database, in which there is stored at least one safety and/or operating area rule, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) .

7. Power tool device at least according to Claim 5, **characterized in that** the open-loop and/or the closed-loop control unit (12a; 12a'; 12b; 12c; 12d) adapts at least one parameter stored in a memory unit of the open-loop and/or closed-loop control unit (12a; 12a'; 12b; 12c; 12d) for providing an open-loop and/or closed-loop control of the drive unit (16a; 16a'; 16b; 16c; 16d) in dependence on electronic data transmitted by means of the communication unit (28a; 28a'; 28b; 28c; 28d).

8. Power tool, in particular a portable power tool, with at least one power tool device according to one of the preceding claims.

9. Power tool system with at least one power tool according to Claim 8 and with at least one external unit (30a), in particular an external sensor unit.

10. Method for controlling at least one power tool in an open-loop and/or closed-loop manner according to Claim 8, wherein the open-loop and/or closed-loop control unit (12a; 12a'; 12b; 12c; 12d) determines at least one machining tool state and outputs the machining tool state by means of an information output unit (34a; 34a'; 34b; 34c; 34d) and/or makes allowance for it for providing an open-loop and/or closed-loop control of the drive unit (16a; 16a'; 16b; 16c; 16d) of the power tool, wherein the open-loop and/or closed-loop control unit (12a; 12a'; 12b; 12c; 12d) uses data recorded by the power tool sensor and/or data transmitted by the communication at least for providing an open-loop and/or closed-loop control of the drive unit (16a; 16a'; 16b; 16c; 16d) wherein the open-loop and/or closed-loop control unit (12a; 12a'; 12b; 12c; 12d) outputs at least one item of information by means of the information output unit (34a; 34a'; 34b; 34c; 34d) in dependence on data recorded by the power tool sensor and/or data transmitted by the communication, **characterized in that,** by means of an operator sensor unit (20a; 20a'; 20b; 20c; 20d), at least one operator-specific characteristic variable is recorded, which is processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for outputting information to an operator and/or **in that**, by means of a workpiece sensor unit (22a; 22a'; 22b; 22c; 22d), at least one workpiece characteristic variable is recorded, which is processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for outputting information to an operator and/or **in that**, by means of a power tool accessory sensor unit (24a; 24a'; 24b; 24c; 24d), at least one power tool accessory characteristic variable is recorded, which is processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for outputting information to an operator.

11. Method according to Claim 10, **characterized in that** allowance is made for at least the drive unit characteristic variable and/or the machining tool characteristic variable for providing an open-loop and/or closed-loop control of the drive unit (16a; 16a'; 16b; 16c; 16d) of the power tool in at least one operating mode of the power tool constantly over an at least substantially entire time in use.

12. Method according to Claim 10 or 11, **characterized in that**, in at least one operating mode, the open-loop and/or closed-loop control unit (12a; 12a'; 12b; 12c; 12d) accesses at least partially automatically by means of a communication unit (28a; 28a'; 28b; 28c; 28d) a central database, in which there is stored at least one safety and/or operating area rule, which can be processed by the open-loop and/or closed-loop control unit (12a; 12a'; 12b; 12c; 12d) at least for providing an open-loop and/or closed-loop control of the drive unit (16a; 16a'; 16b; 16c; 16d).

13. Method according to one of Claims 10 to 12, **characterized in that** the open-loop and/or closed-loop control unit (12a; 12a'; 12b; 12c; 12d) controls at least one operating mode setting of the power tool in an open-loop and/or closed-loop manner in dependence on data recorded by the power tool sensor and/or data transmitted by the communication unit.

## Revendications

1. Dispositif de machine-outil, en particulier dispositif de machine-outil à main, comprenant au moins une unité de commande et/ou de régulation (12a ; 12a' ; 12b ; 12c ; 12d) et au moins une unité de capteur d'unité d'entraînement (14a; 14a' ; 14b ; 14c ; 14d) destinée à acquérir au moins une grandeur caractéristique d'unité d'entraînement qui peut être traitée par l'unité de commande et/ou de régulation (12a ; 12a' ; 12b ; 12c ; 12d) au moins pour effectuer une commande et/ou une régulation d'une unité d'entraînement (16a ; 16a' ; 16b ; 16c ; 16d) d'une machine-outil et/ou pour délivrer une information à un opérateur et au moins une unité de capteur d'outil d'usinage (18a ; 18a' ; 18b ; 18c ; 18d) pour acquérir au moins une grandeur caractéristique d'outil d'usinage qui peut être traitée par l'unité de commande et/ou de régulation (12a ; 12a' ; 12b ; 12c ; 12d) au moins pour effectuer la commande et/ou la régulation de l'unité d'entraînement (16a ; 16a' ; 16b ; 16c ; 16d) et/ou pour délivrer une information à un opérateur, **caractérisé par** au moins une unité de capteur d'opérateur (20a ; 20a' ; 20b ; 20c ; 20d) destinée à acquérir au moins une grandeur caractéristique, spécifique à l'opérateur, qui peut être traitée par l'unité de commande et/ou de régulation (12a ; 12a' ; 12b ; 12c ; 12d) au moins pour effectuer une commande et/ou une régulation de l'unité d'entraînement (16a ; 16a' ; 16b ; 16c ; 16d) et/ou pour délivrer une information à un opérateur et/ou par au moins une unité de capteur de pièce (22a ; 22a' ; 22b ; 22c ; 22d) destinée à acquérir au moins une grandeur caractéristique de pièce qui peut être traitée par l'unité de commande et/ou de régulation (12a ; 12a' ; 12b ; 12c ; 12d) au moins pour effectuer une commande et/ou une régulation de l'unité d'entraînement (16a ; 16a' ; 16b ; 16c ; 16d) et/ou pour délivrer une information à un opérateur et/ou par au moins une unité de capteur d'accessoire de machine-outil (24a ; 24a' ; 24b ; 24c ; 24d) destinée à acquérir au moins une grandeur caractéristique d'accessoire de machine-outil qui peut être traitée par l'unité de commande et/ou de régulation (12a ; 12a' ; 12b ; 12c ; 12d) au moins pour effectuer une commande et/ou une régulation de l'unité d'entraînement (16a ; 16a' ; 16b ; 16c ; 16d) et/ou pour délivrer une information à un opérateur.

2. Dispositif de machine-outil selon la revendication 1, **caractérisé en ce que** l'unité de commande et/ou de régulation (12a ; 12a' ; 12b ; 12c ; 12d) traite, dans au moins un mode de fonctionnement, l'au moins une grandeur caractéristique d'outil d'usinage, acquise au moyen de l'unité de capteur d'outil d'usinage (18a ; 18a' ; 18b ; 18c ; 18d), pour déterminer le type d'un outil d'usinage (42a ; 42b ; 42d) disposé au niveau d'un porte-outil (80a ; 80b ; 80c ; 80d) de la machine-outil.

3. Dispositif de machine-outil selon l'une des revendications précédentes, **caractérisé en ce que** l'unité de commande et/ou de régulation (12a ; 12a' ; 12b ; 12c ; 12d) comprend au moins une unité de mémorisation dans laquelle peut être mémorisé au moins un paramètre de réglage qui est destiné à effectuer une commande et/ou une régulation de l'unité d'entraînement (16a ; 16a' ; 16b ; 16c ; 16d) et qui dépend d'au moins un usinage précédent d'une pièce.

4. Dispositif de machine-outil selon l'une des revendications précédentes, **caractérisé par** au moins une unité d'entrée (26a ; 26a' ; 26b ; 26c ; 26d) destinée à entrer au moins un paramètre de traitement qui peut être traité par l'unité de commande et/ou de régulation (12a ; 12a' ; 12b ; 12c ; 12d) au moins pour effectuer une commande et/ou une régulation de l'unité d'entraînement (16a ; 16a' ; 16b ; 16c ; 16d).

5. Dispositif de machine-outil selon l'une des revendications précédentes, **caractérisé par** au moins une unité de communication (28a ; 28a' ; 28b ; 28c ; 28d) destinée à communiquer avec au moins une unité extérieure (30a ; 30a' ; 30b ; 30c ; 30d) pour échanger des données électroniques au moins pour effectuer une commande et/ou une régulation de l'unité d'entraînement (16a ; 16a' ; 16b ; 16c ; 16d).

6. Dispositif de machine-outil selon la revendication 5, **caractérisé en ce que** l'unité de commande et/ou de régulation (12a ; 12a' ; 12b ; 12c ; 12d) est prévue pour accéder au moyen de l'unité de communication (28a ; 28a' ; 28b ; 28c ; 28d) à une base de données centrale dans laquelle est mémorisée au moins une règle de zone de sécurité et/ou de fonctionnement qui peut être traitée par l'unité de commande et/ou de régulation (12a ; 12a' ; 12b ; 12c ; 12d) au moins pour effectuer la commande et/ou la régulation de l'unité d'entraînement (16a ; 16a' ; 16b ; 16c ; 16d).

7. Dispositif de machine-outil au moins selon la revendication 5, **caractérisé en ce que** l'unité de commande et/ou de régulation (12a ; 12a' ; 12b ; 12c ; 12d) adapte au moins un paramètre, mémorisé dans une unité de mémorisation de l'unité de commande et/ou de régulation (12a ; 12a' ; 12b ; 12c ; 12d), pour effectuer une commande et/ou une régulation de l'unité d'entraînement (16a ; 16a' ; 16b ; 16c ; 16d) en fonction de données électroniques transmises par l'unité de communication (28a ; 28a' ; 28b ; 28c ; 28d) .

8. Machine-outil, en particulier machine-outil portable, comprenant au moins un dispositif de machine-outil selon l'une des revendications précédentes.

9. Système de machine-outil comprenant au moins une machine-outil selon la revendication 8 et au moins une unité extérieure (30a), en particulier une unité de capteur extérieure.

10. Procédé de commande et/ou de régulation d'au moins une machine-outil selon la revendication 8, l'unité de commande et/ou de régulation (12a ; 12a' ; 12b ; 12c ; 12d) déterminant au moins un état d'outil d'usinage et délivrant l'état d'outil d'usinage au moyen d'une unité de délivrance d'informations (34a ; 34a' ; 34b ; 34c ; 34d) et/ou prenant cet état d'outil d'usinage pour effectuer une commande et/ou une régulation de l'unité d'entraînement (16a ; 16a' ; 16b ; 16c ; 16d) de la machine-outil, l'unité de commande et/ou de régulation (12a ; 12a' ; 12b ; 12c ; 12d) utilisant des données acquises par un capteur de machine-outil et/ou des données transmises par l'unité de communication au moins pour effectuer une commande et/ou une régulation de l'unité d'entraînement (16a ; 16a' ; 16b ; 16c ; 16d), l'unité de commande et/ou de régulation (12a ; 12a' ; 12b ; 12c ; 12d) délivrant au moins une information au moyen de l'unité de délivrance d'informations (34a ; 34a' ; 34b ; 34c ; 34d) en fonction de données acquises par le capteur de machine-outil et/ou de données transmises par l'unité de communication,
**caractérisé en ce qu'**au moins une grandeur caractéristique spécifique à l'opérateur est acquise au moyen d'une unité de capteur d'opérateur (20a ; 20a' ; 20b ; 20c ; 20d), laquelle grandeur caractéristique est traitée par l'unité de commande et/ou de régulation (12a ; 12a' ; 12b ; 12c ; 12d) au moins pour effectuer la commande et/ou la régulation de l'unité d'entraînement (16a ; 16a' ; 16b ; 16c ; 16d) et/ou pour délivrer une information à un opérateur et/ou **en ce qu'**au moins une grandeur caractéristique de pièce est acquise au moyen d'une unité de capteur de pièce (22a ; 22a' ; 22b ; 22c ; 22d), laquelle grandeur caractéristique est traitée par l'unité de commande et/ou de régulation (12a ; 12a' ; 12b ; 12c ; 12d) au moins pour effectuer une commande et/ou une régulation de l'unité d'entraînement (16a ; 16a' ; 16b ; 16c ; 16d) et/ou pour délivrer une information à un opérateur et/ou qu'au moins une grandeur caractéristique d'accessoire de machine-outil est acquise au moyen d'une unité de capteur d'accessoire de machine-outil (24a ; 24a' ; 24b ; 24c ; 24d), laquelle grandeur caractéristique est traitée par l'unité de commande et/ou de régulation (12a ; 12a' ; 12b ; 12c ; 12d) au moins pour effectuer une commande et/ou une régulation de l'unité d'entraînement (16a ; 16a' ; 16b ; 16c ; 16d) et/ou pour délivrer une information à un opérateur.

11. Procédé selon la revendication 10, **caractérisé en ce qu'**au moins la grandeur caractéristique d'unité d'entraînement et/ou la grandeur caractéristique d'outil d'usinage sont prises en compte pour effectuer une commande et/ou une régulation de l'unité d'entraînement (16a ; 16a' ; 16b ; 16c ; 16d) de la machine-outil dans au moins un mode de fonctionnement de la machine-outil régulièrement sur au moins sensiblement toute la durée d'utilisation.

12. Procédé selon la revendication 10 ou 11, **caractérisé en ce que** l'unité de commande et/ou de régulation (12a ; 12a' ; 12b ; 12c ; 12d) accède, dans au moins un mode de fonctionnement, de manière au moins partiellement automatique au moyen d'une unité de communication (28a ; 28a' ; 28b ; 28c ; 28d), à une base de données centrale dans laquelle est mémorisée au moins une règle de sécurité et/ou de zone de fonctionnement qui peut être traitée par l'unité de commande et/ou de régulation (12a ; 12a' ; 12b ; 12c ; 12d) au moins pour effectuer une commande et/ou une régulation de l'unité d'entraînement (16a ; 16a' ; 16b ; 16c ; 16d).

13. Procédé selon l'une des revendications 10 à 12, **caractérisé en ce que** l'unité de commande et/ou de régulation (12a ; 12a' ; 12b ; 12c ; 12d) commande et/ou régule au moins un réglage du mode de fonctionnement de la machine-outil en fonction de données acquises par le capteur de machine-outil et/ou de données transmises par l'unité de communication.
